# FASCICULE DE BREVET EUROPEEN

(11) **EP 1 899 134 B1**
(45) Date de publication et mention de la délivrance du brevet: **20.01.2010**
(21) Numéro de dépôt: 06778760.6
(22) Date de dépôt: 04.07.2006
(51) Int. Cl.: B29C 45/27

(54) **DISPOSITIF D'INJECTION MOULAGE A CHAUFFAGE DE BUSE INDEXE**
SPRITZGIESSVORRICHTUNG MIT GESCHALTETER DÜSENERWÄRMUNG
INJECTION MOULDING DEVICE WITH INDEXED NOZZLE HEATING

(30) Priorité: 05.07.2005 FR 0507131
(43) Date de publication de la demande: 19.03.2008
(73) Titulaire: RUNIPSYS EUROPE, 73420 Mery (FR)
(72) Inventeur: RAMOND, Louis, 58270 Beaumont Sardolle (FR)
(74) Mandataire: Tetaz, Franck Claude Edouard
(86) Numéro de dépôt international: PCT/FR2006/001573
(87) Numéro de publication internationale: WO 2007/006899

(56) Documents cités:
- WO-A-01/98054
- WO-A-01/98055
- WO-A-2004/043672

## Description

La présente invention concerne un dispositif d'injection d'une matière thermoplastique à l'état liquide dans une empreinte de moulage, comportant, en référence à un sens longitudinal déterminé d'injection :
- une matrice rigide, présentant une face avant délimitant partiellement l'empreinte de moulage, une face arrière et au moins un passage longitudinal traversant la matrice, de sa face arrière à sa face avant, suivant un axe longitudinal déterminé,
- une buse longitudinale d'injection, disposée coaxialement à l'intérieur dudit passage et présentant une zone d'extrémité arrière et une zone d'extrémité avant, respectivement adjacentes à ladite face arrière et à ladite face avant, une périphérie intérieure longitudinale délimitant un canal longitudinal débouchant dans la zone d'extrémité arrière et dans la zone d'extrémité avant et une périphérie extérieure longitudinale,
- des moyens d'alimentation de la buse en matière thermoplastique à l'état liquide, situés en arrière de ladite face arrière et reliés mécaniquement à la matrice et fluidiquement audit canal dans la zone d'extrémité arrière de la buse,
- un manchon longitudinal de chauffage enveloppant coaxialement la buse à l'intérieur dudit passage, portant solidairement une installation électrique incluant une résistance électrique de chauffage par effet Joule et présentant une périphérie intérieure longitudinale en contact intime de conduction thermique et de retenue par friction, dans une position relative longitudinalement déterminée de service, avec la périphérie extérieure de la buse et une périphérie extérieure longitudinale portant solidairement un nombre déterminé de plages électriquement conductrices reliées électriquement à ladite installation électrique et occupant des positions respectives longitudinalement et circonférentiellement déterminées sur la périphérie extérieure du manchon, le manchon étant susceptible d'être amené à sa position relative longitudinalement déterminée de service par coulissement longitudinal sur la buse dans un sens longitudinal déterminé de montage, et
- des moyens de liaison électrique entre lesdites plages électriquement conductrices et des moyens électriques d'alimentation commandée de ladite résistance électrique en électricité.

Un tel dispositif est bien connu en lui-même, dans de nombreux modes de réalisation qui diffèrent en particulier par la façon dont est réalisé le manchon longitudinal de chauffage, destiné à maintenir la matière thermoplastique, à l'intérieur du canal longitudinal de la buse, à une température à la fois suffisamment élevée pour lui conserver l'état liquide et suffisamment faible pour ne pas risquer la détérioration.

Dans son mode de réalisation le plus ancien, le manchon de chauffage présente la forme d'une gaine plate et souple qui loge la résistance électrique de chauffage et que l'on enroule localement autour de la buse, sur laquelle on la maintient par divers moyens auxiliaires de serrage. Généralement, le manchon présente alors des dimensions longitudinales largement inférieures à celles de la buse, en particulier pour des raisons inhérentes à sa fabrication, et l'on en juxtapose plusieurs exemplaires longitudinalement le long de celle-ci. Cette nécessité de juxtaposer ainsi plusieurs manchons de ce mode de réalisation sur une même buse, et de prévoir un nombre de moyens de liaison électrique en rapport, constitue l'un des inconvénients de ce mode de réalisation, en compliquant les opérations de montage et, lors de la maintenance, de démontage suivi de remontage, et en obligeant à dimensionner largement le passage prévu pour recevoir la buse dans la matrice, aux fins d'autoriser le passage de multiples connecteurs électriques souples constituant ces moyens de liaison électrique souples constituant ces moyens de liaison électrique au moins sur leur partie la plus proche des manchons. Cet inconvénient est encore aggravé par un encombrement important de chaque manchon ainsi réalisé suivant une direction radiale en référence à l'axe commun à la buse et au passage prévu pour recevoir celle-ci à l'intérieur de la matrice, ce qui oblige à dimensionner encore plus largement ce passage et empêche de prévoir plusieurs exemplaires de ce passage, c'est-à-dire plusieurs buses d'injection, dans une grande proximité mutuelle lorsqu'on souhaite mouler des pièces complexes en desservant une même empreinte par plusieurs buses ou lorsqu'on désire mouler simultanément plusieurs pièces au moyen de buses respectives dans des empreintes respectives d'une même matrice. Un manchon ainsi réalisé présente en outre l'inconvénient d'un médiocre contact de conduction thermique avec la buse, réduisant considérablement le rendement énergétique et introduisant une part d'aléa dans le maintien de la température souhaitée à l'intérieur du canal de passage de la matière thermoplastique à l'état liquide dans la buse, et il se révèle vulnérable en particulier sur le plan mécanique.

Pour remédier à ces inconvénients, on a proposé, depuis de nombreuses années, un nouveau mode de réalisation du manchon de chauffage, selon lequel ce manchon présente la forme d'un tube métallique sur lequel l'installation électrique, incluant la résistance électrique de chauffage, est réalisée par sérigraphie ou par tout autre procédé équivalent, l'isolation électrique étant réalisée par des couches d'un matériau céramique approprié, enveloppant cette installation électrique de toute part. Les plages électriquement conductrices peuvent elles-mêmes être réalisées par sérigraphie ou tout autre procédé équivalent, et restent naturellement découvertes aux fins d'autoriser leur raccordement électrique aux moyens de liaison électrique avec les moyens électriques d'alimentation commandée de la résistance électrique en électricité.

Ce mode de réalisation permet effectivement de remédier aux inconvénients précités du mode de réalisation précédemment connu, puisqu'il devient possible de réduire considérablement les dimensions du manchon selon une direction radiale en référence à l'axe, de donner au manchon toute dimension longitudinale voulue et, ainsi, de pouvoir associer un seul manchon à une buse en réduisant d'autant les besoins en liaison électrique, ce qui permet de réduire également considérablement les dimensions transversales que l'on doit donner au passage recevant la buse dans la matrice et d'autoriser une multiplication des buses et, le cas échéant, d'empreintes associées à des buses respectives, pour des dimensions transversales identiques de matrice. Ce mode de réalisation permet en outre d'obtenir un contact intime entre le manchon et la buse, c'est-à-dire une qualité nettement supérieure d'échange thermique avec la buse et, à travers celle-ci, avec la matière thermoplastique transitant par le canal de celle-ci, en offrant ainsi un rendement énergétique largement amélioré et une meilleure maîtrise de la température effective de la matière thermoplastique à l'intérieur de la buse, et il bénéficie d'une robustesse et d'une longévité considérablement accrues.

Cependant, ce nouveau mode de réalisation du manchon de chauffage conserve l'un des inconvénients du mode de réalisation antérieur, en ce sens que la liaison électrique entre les plages électriquement conductrices et les moyens électriques d'alimentation commandée de la résistance électrique en électricité s'effectue au moyen de conducteurs souples fixés à demeure sur ces plages, par exemple par soudure, si bien que les manchons doivent être placés sur les buses, aussi bien dans ce nouveau mode de réalisation que dans le mode de réalisation antérieur, alors qu'ils comportent déjà ces conducteurs, qui gênent la manipulation et que l'on doit prendre soin de positionner ensuite de telle sorte qu'ils ne courent aucun risque lors de l'utilisation du dispositif d'injection, en leur faisant suivre une trajectoire plus ou moins compliquée, à l'intérieur de celui-ci, jusqu'à un bornier de raccordement aux moyens électriques d'alimentation commandée de la résistance électrique en électricité.

Déjà complexe lors du premier montage d'un dispositif d'injection, cette opération devient particulièrement difficile lorsqu'il s'agit d'intervenir pour remplacer un manchon défectueux, ce qui peut obliger à démonter complètement le dispositif d'injection.

Le nouveau mode de réalisation précité du manchon présente en outre un inconvénient spécifique, en ce que l'obtention d'une soudure à la fois suffisamment robuste mécaniquement et suffisamment conductrice électriquement, sur les plages électriquement conductrices, en particulier lorsque ces dernières sont réalisées par sérigraphie ou par un procédé équivalent, constitue une opération délicate. Le document WO-A-0198055 décrit un dispositif d'injection selon le préambule de la revendication 1.

Le but de la présente invention est de remédier à ces inconvénients, quel que soit le mode de réalisation choisi pour le manchon de chauffage même s'il est bien entendu que les avantages du mode de réalisation le plus récent amènent à choisir plutôt celui-ci.

A cet effet, le dispositif d'injection selon l'invention, est défini par les caractéristiques de la revendication 1.
- La matrice, à l'intérieur dudit passage, et le manchon présentent solidairement des moyens respectifs de détrompage, aptes à s'emboîter mutuellement lorsque le manchon coulisse longitudinalement sur la buse dans ledit sens de montage en occupant une orientation angulaire déterminée, en référence audit axe, par rapport à la matrice, pour permettre au manchon d'atteindre alors ladite position longitudinalement déterminée de service, et à constituer des moyens de butée pour le manchon dans ledit sens de montage dans ladite position longitudinalement déterminée de service, lorsque le manchon occupe ladite orientation angulaire déterminée, et dans une position décalée longitudinalement par rapport à ladite position longitudinalement déterminée de service, vers l'amont en référence audit sens de montage, lorsque le manchon occupe une orientation différente de ladite orientation angulaire déterminée, en référence audit axe, pour empêcher le manchon d'atteindre alors ladite position longitudinalement déterminée de service.
- Les moyens de liaison électrique comportent ledit nombre déterminé de lames longitudinales de contact, électriquement conductrices et mutuellement isolées, dont chacune correspond à l'une, respective, desdites plages électriquement conductrices et présente une première extrémité, libre, occupant à l'intérieur dudit passage une position longitudinalement et circonférentiellement déterminée, correspondant à celle qu'occupe la plage électriquement conductrice correspondante lorsque le manchon occupe ladite position longitudinalement déterminée de service et ladite orientation angulaire déterminée, par rapport à la matrice, et une deuxième extrémité décalée par rapport à la première extrémité, fixe par rapport à la matrice et raccordée électriquement auxdits moyens électriques d'alimentation commandée, chaque lame étant élastiquement flexible de telle sorte que sa première extrémité s'applique fermement, dans une relation de conduction électrique, contre la plage électriquement conductrice correspondante, moyennant une contrainte élastique transversale de la lame, lorsque le manchon occupe ladite position longitudinale déterminée de service et ladite orientation angulaire déterminée.
- Les dimensions longitudinales respectives des plages électriquement conductrices, des premières extrémités des lames de contact et du décalage entre ladite position longitudinalement décalée du manchon et ladite position longitudinalement déterminée de service du manchon sont choisies telles que, dans ladite position longitudinalement décalée du manchon, les plages électriquement conductrices soient décalées longitudinalement par rapport aux premières extrémités des lames de contact et que ladite relation de conduction électrique ne puisse alors être établie.

Comme le comprendra aisément un Homme du métier, l'utilisation de lames élastiques de contact pour assurer une liaison électrique entre les plages électriquement conductrices portées par le manchon et les moyens électriques d'alimentation commandée de la résistance électrique chauffante en électricité permet d'éviter d'avoir à composer avec la présence de conducteurs souples sur le manchon pendant la mise en place de celui-ci sur la buse ou lors d'un changement de manchon, et en particulier d'avoir à se soucier du passage de tels conducteurs souples jusqu'à un bornier de raccordement. Quelle que soit la façon dont le manchon est réalisé, c'est-à-dire qu'il soit réalisé selon le premier ou le deuxième des modes de réalisation précités, les conducteurs, alors souples ou non, assurant la connexion électrique entre les lames électriquement conductrices et les moyens électriques d'alimentation commandée de la résistance électrique en électricité peuvent être portés de façon fixe par la matrice ou par un composant solidaire de celle-ci, dans des conditions totales de sécurité et sans qu'il soit besoin d'y intervenir par exemple lorsqu'on change un manchon défectueux. Cependant, la présence combinée des moyens de détrompage permet d'assurer dans de bonnes conditions la mise en place du manchon sur la buse, propre à établir le contact entre l'extrémité libre de chaque lame et la plage électriquement conductrice qui lui correspond, uniquement lorsque le manchon atteint sa position de service, ce qui implique qu'il présente également l'orientation requise.

De plus, lorsque, comme il est préféré, le manchon se présente conformément au deuxième mode de réalisation précité, c'est-à-dire sous la forme d'un tube sur lequel la résistance chauffante et les plages électriquement conductrices sont réalisées par sérigraphie ou par un procédé équivalent, on évite d'avoir à souder, ou à fixer autrement, des conducteurs de raccordement électrique aux plages électriquement conductrices, ce qui permet d'éviter tous les inconvénients qui peuvent être liés à une telle soudure.

On peut choisir librement l'orientation de chaque lame entre ses première et deuxième extrémités mais, de préférence, on choisit une orientation longitudinale et, afin d'éviter tout risque d'endommagement des lames lors de la mise en place du manchon sur la buse, les premières et deuxièmes extrémités des lames sont respectivement des extrémités aval et des extrémités amont de celles-ci, en référence au sens de montage.

On évite ainsi tout risque qu'un chant du manchon, tourné vers l'avant en référence à ce sens, puisse venir buter sur les premières extrémités des lames et endommager ces dernières par un effet d'arc-boutement, et l'on facilite au contraire une insertion du manchon entre la buse et les premières extrémités des lames, moyennant une flexion élastique de ces dernières.

On peut également choisir librement le sens de montage, à la condition de positionner les moyens de détrompage en relation avec celui-ci, mais, de préférence, le sens de montage est opposé au sens d'injection et les moyens de détrompage sont localisés dans des zones du manchon et de la matrice, respectivement, correspondant à la zone d'extrémité arrière de la buse.

Un Homme du métier comprendra aisément qu'ainsi, les opérations de démontage et de remontage nécessaires lorsqu'il s'agit de changer un manchon sont considérablement simplifiées si l'on tient compte de ce que, en outre, la matrice est généralement formée d'un empilement longitudinal de composants plats, mutuellement jointifs par des faces respectives transversales. En effet, on peut alors procéder au changement d'un manchon en n'ayant démonté que le composant ou les composants de la matrice les plus proches de l'empreinte, sans avoir à démonter la buse elle-même, ainsi que tous les composants qui sont nécessaires à ce démontage de la buse, et sans risquer de détruire les réglages réalisés au préalable sur des composants se trouvant en arrière de la buse, tels que des moyens de commande d'une tige longitudinale d'obturation commandée de celle-ci en cas de buse à obturation commandée.

Cet avantage est, naturellement, particulièrement sensible lorsque le manchon est unique, et s'étend sur la majeure partie de la dimension longitudinale de la buse puisque les interventions de démontage et de montage du manchon ne nécessitent alors d'avoir accès qu'au niveau de la zone d'extrémité avant de la buse, à partir de laquelle on peut imprimer au manchon une poussée longitudinale de montage sur celle-ci ou une traction longitudinale de démontage par rapport à celle-ci.

Les moyens de détrompage peuvent également se présenter sous différentes formes mais, selon un mode de réalisation préféré, ces moyens de détrompage comportent une encoche longitudinale aménagée dans un chant transversal du manchon, tourné vers l'avant en référence au sens de montage, et un doigt transversal fixe par rapport à la matrice et formant une saillie vers l'axe à l'intérieur dudit passage, dans une position telle qu'il s'emboîte dans ladite encoche lorsque le manchon occupe ladite position longitudinalement déterminée de service et ladite orientation déterminée, en référence audit axe, et, de préférence, puisse alors venir buter longitudinalement contre un fond de l'encoche, et qu'il bute contre ledit chant de manchon en empêchant le manchon d'atteindre ladite position longitudinalement déterminée de service lorsqu'on le fait coulisser longitudinalement sur la buse, dans le sens de montage, alors qu'il occupe une orientation angulaire différente de ladite orientation angulaire déterminée, en référence audit axe.

L'aménagement d'une encoche localisée dans un chant transversal du manchon constitue une opération simple, et un tel mode de réalisation des moyens d'indexage permet de conserver par ailleurs au manchon une conception inchangée, par exemple selon le deuxième des modes de réalisation connus précités. L'indexage ainsi réalisé offre cependant toute sécurité.

Divers modes de montage des lames de contact dans la matrice, avec isolation électrique mutuelle, peuvent être choisis. Cependant, on facilite ce montage et cette isolation mutuelle si, selon un mode de mise en oeuvre préféré de la présente invention, les deuxièmes extrémités des lames de contact sont fixées solidairement à une bague annulaire, en matériau électriquement isolant, entourant localement ledit passage et elle-même fixée à la matrice. Un tel mode de montage des lames de contact facilite également leur changement, en une seule opération, en cas de détérioration ou d'usure de l'une d'entre elles.

Bien plus, lorsque la matrice comporte au moins deux composants transversaux, plats, mutuellement accolés par des faces transversales, planes, respectives, conformément au mode de réalisation connu précité, on prévoit avantageusement que ces faces transversales définissent ensemble, autour dudit passage, une gorge annulaire de réception de ladite bague annulaire et d'immobilisation de celle-ci dans les directions longitudinale, transversale et circonférentielle, ce qui met à profit la structure connue de la matrice pour faciliter le montage et le démontage de la bague annulaire et des lames qu'elle porte.

La bague annulaire et ladite gorge de réception de celle-ci présentent de préférence des formes générales respectives de révolution autour dudit axe et mutuellement complémentaires, ce qui facilite en particulier l'usinage de la gorge dans le composant correspondant de la matrice, lors de l'usinage de la partie correspondante du perçage, dont la forme est également avantageusement de révolution autour dudit axe, comme il est connu en soi. La bague annulaire et la gorge comportent alors des moyens d'indexage en direction circonférentielle, qui permettent d'assurer le positionnement précis des lames électriquement conductrices suivant cette direction circonférentielle, en relation avec le positionnement des plages électriquement conductrices avec lesquelles elles sont appelées à coopérer.

La bague pouvant avantageusement être réalisée par moulage d'un matériau synthétique approprié, les moyens d'indexage en direction circonférentielle peuvent avantageusement comporter d'une part, sur la bague, un doigt transversal fixe par rapport à celle-ci, par exemple moulé d'une pièce avec celle-ci, et formant une saillie dans le sens d'un éloignement par rapport à l'axe, et d'autre part, dans l'un, au moins, desdits composants, une encoche de réception dudit doigt, laquelle est également facile à réaliser par usinage une fois usinée la gorge de réception de la bague, ou peut-être aussi constituée par une zone extrême d'un canal aménagé dans le composant dans lequel est aménagée la gorge annulaire aux fins de loger des conducteurs électriques de liaison entre les deuxièmes extrémités des lames électriquement conductrices et les moyens électriques d'alimentation commandée. L'aménagement d'un tel canal, de toute façon nécessaire, permet ainsi de réaliser directement, sans opération supplémentaire, l'encoche de réception du doigt de la bague annulaire. Comme on l'a précédemment indiqué, ces conducteurs électriques de liaison peuvent être placés à demeure dans le canal en question puisque le montage et le démontage du manchon ne nécessitent pas de les déplacer.

Le mode d'aménagement, sur la matrice, des moyens de détrompage correspondant à celle-ci, à savoir un doigt en saillie vers l'axe à l'intérieur du passage de réception de la buse afin de coopérer avec une encoche d'un chant du manchon selon un mode de réalisation préféré des moyens de détrompage, peut également être choisi dans une large gamme de possibilités assurant une fixité de ce doigt par rapport à la matrice.

Selon un mode de réalisation préféré, permettant de réduire à un minimum le nombre des composants nécessaires à la mise en oeuvre de la présente invention, et dans la mesure où ladite bague annulaire est ainsi indexée en direction circonférentielle par rapport à la matrice, cette bague annulaire porte solidairement non seulement les deuxièmes extrémités des lames de contact mais également les moyens de détrompage correspondant à la matrice, à savoir ce doigt en saillie vers l'axe à l'intérieur du passage de réception de la buse selon le mode de réalisation préféré précité, ce qui permet d'aménager ces moyens de détrompage de façon particulièrement simple et économique, lors de la fabrication de la bague annulaire, par exemple par moulage en une pièce avec celle-ci ou sous forme d'une pièce distincte ensuite assemblée par des moyens simples à la bague annulaire, et de mettre en place ou de démonter, en une seule opération, avec la bague annulaire, l'ensemble des lames de contact et des moyens de détrompage correspondant à la matrice. Ceci permet aussi de limiter les usinages supplémentaires à réaliser sur celle-ci, lorsqu'on combine l'ensemble des modes de réalisation préférés précités, à l'aménagement de la gorge de réception de la bague annulaire dans l'un de ces composants, étant entendu qu'il est de toute façon nécessaire d'y prévoir un canal pour loger des conducteurs électriques.

En dépit de ces avantages considérables par rapport à l'Art antérieur, la présente invention ne nécessite ainsi que peu d'usinages supplémentaires et peu de composants supplémentaires en comparaison avec l'Art antérieur.

D'autres caractéristiques et avantages d'un dispositif d'injection selon l'invention ressortiront de la description ci-dessous, relative à un exemple non limitatif de réalisation, ainsi que des dessins annexés qui font partie intégrante de cette description.

La figure 1 montre une vue d'une partie d'un dispositif d'injection-moulage mettant en oeuvre l'invention, pour partie en coupe par un plan incluant l'axe d'une buse et repéré en I-I à la figure 3.

La figure 2 montre un détail agrandi de la figure 1.

La figure 3 montre le même détail, en coupe par un plan repéré en III-III à la figure 2, ce plan incluant également l'axe de la buse mais étant orienté perpendiculairement au plan de coupe des figures 1 et 2.

La figure 4 montre une vue du même détail, en coupe par des plans partiels perpendiculaires à l'axe de la buse et repérés en IV-IV à la figure 3.

La figure 5 illustre, en une vue similaire à celle de la figure 4, un ensemble solidaire constitué par la bague annulaire portant solidairement les lames de contact, les moyens d'indexage qui lui sont propres et les moyens de détrompage correspondant à la matrice, l'ensemble ainsi constitué étant vu dans un sens axial repéré en V à la figure 6.

La figure 6 montre une vue du même ensemble, en coupe par un plan repéré en VI-VI à la figure 5 et correspondant au plan de coupe I-I des figures 1 et 2.

La figure 7 montre la bague annulaire seule, en une vue correspondant à celle de la figure 5.

La figure 8 montre une vue en perspective du manchon longitudinal de chauffage.

Dans son mode de réalisation illustré à titre d'exemple non limitatif, le dispositif selon l'invention est destiné à fabriquer simultanément, par injection-moulage, plusieurs produits identiques, tels que des bouchons pour des bouteilles d'eau, de produit détergent ménager ou produit similaire ; il est bien entendu, toutefois, que la présente invention pourrait également trouver son application au moulage d'une seule pièce de dimension plus importante que celle d'un bouchon, ou toute autre pièce, en mettant en oeuvre une buse d'injection unique ou plusieurs buses d'injection.

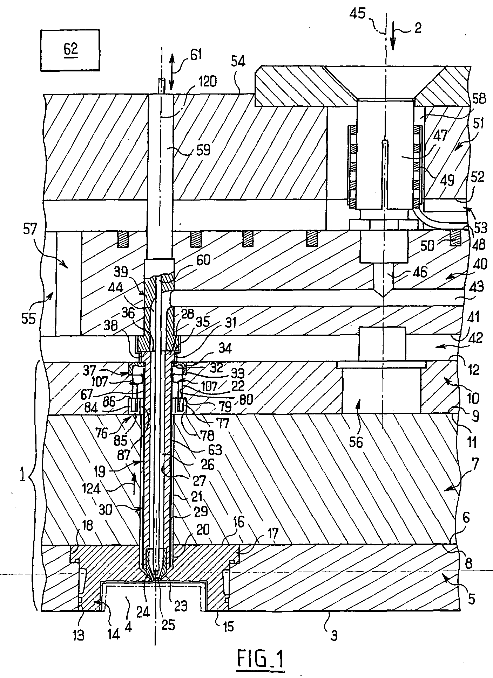

Dans sa version illustrée à la figures 1, le dispositif d'injection comporte ainsi une matrice rigide 1, qui, en référence à un sens longitudinal d'injection 2 déterminé, qui servira de référence aux notions d'avant et d'arrière, sauf exception explicite, ainsi que de longitudinalité et de transversalité pour l'ensemble de la présente description, présente une face avant 3 par exemple plane, ici creusée de plusieurs empreintes 4 de moulage, par exemple mutuellement identiques, dont une seule a été illustrée, ou plus généralement d'autant d'exemplaires d'une empreinte de moulage que l'on souhaite mouler simultanément de produits.

Comme il est bien connu d'un Homme du métier, la matrice 1 est formée d'un empilage, à plat, parallèlement au sens 2, d'une pluralité de plaques plates, à savoir dans l'exemple illustré une plaque avant 5 présentant deux faces principales planes, mutuellement parallèles et perpendiculaires au sens 2, à raison de la face avant 3 de la matrice 1 et d'une face arrière 6, d'une plaque entretoise 7 présentant également deux faces principales planes, mutuellement parallèles et perpendiculaires au sens 2, à raison d'une face avant 8 qui s'applique à plat contre la face arrière 6 de la plaque avant 5 et d'une face arrière 9, et d'une plaque arrière 10 présentant également deux faces principales planes, mutuellement parallèles et perpendiculaires au sens 2, à raison d'une face avant 11 qui s'applique à plat contre la face arrière 9 de la plaque entretoise 7 et d'une face arrière 12 qui constitue une face arrière pour la matrice 1 considérée dans son ensemble.

Le nombre des plaques ainsi empilées longitudinalement pour constituer la matrice 1 pourrait cependant être différent, étant entendu qu'une réalisation de la matrice 1 en au moins deux de ces plaques, jointives par des faces transversales respectives, est avantageusement mise à profit dans le cadre de la présente invention, comme il ressort de la suite de la description en relation avec le mode de réalisation ainsi choisi, à titre d'exemple non limitatif, pour la matrice 1.

Les trois plaques 5, 7. et 10, présentent par ailleurs des chants périphériques extérieurs, non illustrés, qui se complètent longitudinalement pour définir un chant périphérique extérieur pour la matrice 1.

A l'emplacement de chaque empreinte 4, la plaque 5 est percée parallèlement au sens 2, de part en part, c'est-à-dire de sa face arrière 6 à sa face avant 3, d'un logement respectif 13 pour une pièce rapportée 14 respective constituant l'empreinte 4 proprement dite, chaque pièce 14 présentant vers l'avant, autour de l'empreinte 4 respective, une face avant plane 15 coplanaire de la face avant 3 de la matrice 1,
ou de la plaque 5, et vers l'arrière une face arrière plane 16 coplanaire de la face arrière 6 de la plaque avant 5, de façon à s'appuyer comme cette dernière, vers l'arrière, sur la face avant 8 de la plaque 7. L'emboîtement d'une nervure périphérique 17 que chaque pièce 11 présente à proximité immédiate de cette face arrière 16, dans une gorge périphérique 18 aménagée complémentairement dans chaque logement 13, à proximité immédiate de la face arrière 6 de la plaque 5, permet d'immobiliser chaque pièce 14 par rapport aux plaques 5,7 par pincement entre ces dernières parallèlement au sens 2, en raison d'un assemblage mutuel des plaques 5 et 7 par l'intermédiaire de vis longitudinales non représentées, accessibles par la face avant 3 de la plaque avant 5.

Les plaques 7 et 10 sont également assemblées mutuellement par l'intermédiaire de vis longitudinales non représentées et accessibles soit par la face avant 6 de la plaque entretoise 7, après démontage de la plaque avant 5, soit à travers des trous longitudinaux traversants, également non représentés, de la plaque avant 5.

Un tel montage est bien connu d'un Homme du métier et il ne nécessite par conséquent pas davantage de description.

De même, d'une façon bien connue d'un Homme du métier, qui ne sera pas décrite dans le détail, à chaque empreinte 4 est associée une buse longitudinale respective 19 d'injection de matière thermoplastique à l'état liquide, étant bien étendu que plusieurs exemplaires d'une buse 19 pourraient être associés à une même empreinte 4, en particulier dans le cas d'une empreinte 4 unique.

Chaque buse 19 est disposée suivant un axe respectif 120 qui est orienté parallèlement au sens 2, c'est-à-dire longitudinalement, et, dans l'exemple illustré, constitue avantageusement un axe de symétrie pour l'empreinte 4 correspondante ainsi que pour la pièce 14 correspondante dans son ensemble.

Pour recevoir la buse 19 correspondante, chaque pièce 14 et, coaxialement à chaque pièce 14 respectivement, les plaques 7 et 10 sont percées d'un passage longitudinal respectif 20, 21, 22 qui les traverse de part en part suivant l'axe 120, c'est-à-dire respectivement de la face arrière 16 vers l'empreinte 4, de la face arrière 9 vers la face avant 8 et de la face arrière 12 vers la face avant 11, dans le sens 2.

Dans une zone d'extrémité avant 23, située à l'intérieur du passage 20 de la pièce 14 correspondante et adjacente à l'empreinte 4 correspondante, chaque buse 19 est délimitée, dans le sens d'un éloignement par rapport à l'axe 120, par une périphérie extérieure 24 approximativement tronconique de révolution autour de cet axe et se rétrécissant vers l'avant jusqu'à un orifice d'injection 25 débouchant dans l'empreinte 4 et constituant l'extrémité avant d'un canal longitudinal, coaxial 26, délimité par une périphérie intérieure 27 de la buse 19. La forme de cette périphérie intérieure 27 est indifférente au regard de la présente invention, et ne sera de ce fait pas détaillée.

Sur la majeure partie de sa dimension longitudinale, entre la zone d'extrémité avant 23 et une zone extrême arrière 28 respective, chaque buse 19 est délimitée, dans le sens d'un éloignement par rapport à l'axe 120 respectif, par une périphérie extérieure 29 cylindrique de révolution autour de cet axe 120, avec un diamètre correspondant au plus grand diamètre de la périphérie extérieure approximativement tronconique 24, à laquelle cette périphérie extérieure 29 se raccorde vers l'avant.

Chaque buse 19 est équipée; sur la majeure partie de la dimension longitudinale de sa périphérie extérieure cylindrique 29, de moyens 30 de chauffage et de régulation de température, qui seront décrits par la suite, afin de maintenir la matière thermoplastique en cours d'injection à l'état liquide à l'intérieur du canal 26, par conduction thermique entre la périphérie extérieure 29 et la périphérie intérieure 27, à travers le matériau constitutif de la buse 19.

Dans sa zone extrême arrière 28, chaque buse 19 présente un élargissement 31, en direction radiale par rapport à l'axe 120 respectif, cet élargissement 31 définissant vers l'avant, à sa jonction avec la périphérie extérieure 29, un épaulement annulaire 32, perpendiculaire à l'axe 120 respectif et tourné vers l'avant. Par cet épaulement 32, situé à un niveau intermédiaire entre les faces 11 et 12 de la plaque 10, chaque buse 19 prend appui vers l'avant, par l'intermédiaire d'une rondelle transversale respective 37 formant un ressort communiquant une élasticité longitudinale à cet appui, sur un épaulement annulaire 33 aménagé complémentairement, en creux, dans la face arrière 12 de la plaque 10, lequel épaulement 33 est tourné vers l'arrière et constitue le fond d'une zone 34 élargie, perpendiculairement à l'axe 120 respectif, que chaque passage 22 présente à proximité immédiate de son raccordement à la face arrière 12 de la plaque arrière 10.

Chaque rondelle formant ressort 37 est choisie d'un type en quart de tore de révolution autour d'un axe respectif qui se confond avec l'axe 120 et elle est disposée, comme le montrent les figures 1 à 3, de façon à assurer également la coaxialité de la buse 19 correspondante par rapport au passage 22 correspondant, en épousant la périphérie extérieure 29 de la buse, par un chant annulaire, non référencé, cylindrique de révolution autour de l'axe 120, à proximité immédiate de l'épaulement 32, et en s'incurvant dans le sens 2 à partir de ce chant, jusqu'à un chant annulaire plan, perpendiculaire à l'axe 120, par lequel elle s'appuie à plat sur l'épaulement 33, dans le sens 2, à proximité immédiate de la jonction entre celui-ci et une face périphérique intérieure 117 cylindrique de révolution autour de l'axe 120 et tournée vers celui-ci, laquelle face 117 délimite le passage 22 dans le sens d'un éloignement par rapport à l'axe 120 au niveau de l'élargissement 31, entre l'épaulement 33 et la face arrière 12 de la plaque arrière 10.

La coaxialité de la buse avec l'ensemble des passages 20, 21, 22 peut être assurée en outre par une conjugaison localisée de formes entre la zone d'extrémité avant 23 de la buse 19 et le passage 20 aménagé dans la pièce 4, d'une façon connue en elle-même, qui ne sera de ce fait pas décrite davantage mais dont on remarquera qu'elle ne met pas en oeuvre la périphérie extérieure cylindrique 29 de la buse 19.

De façon également connue, chaque buse 19 forme une saillie, vers l'arrière, par rapport à la face 12 de la plaque 10, à savoir par son élargissement 31 qui est délimité vers l'arrière par une face arrière, plane 35 qui est orientée perpendiculairement à l'axe 120 correspondant et se situe, pour toutes les buses 19, en arrière de la face arrière 12 de la plaque 10. La face arrière 35 de chaque buse 19 est annulaire et présente suivant l'axe 120 correspondant une embouchure 36 constituant l'extrémité arrière du canal 26 correspondant.

De façon bien connue en elle-même, les rondelles transversales formant ressort 37, intercalées entre les épaulements 32 et 33, tendent à repousser élastiquement chaque buse 19 vers l'arrière par rapport à la plaque 10, ce qui permet d'utiliser un simple appui de chaque face 35, vers l'arrière, contre une face avant 38 annulaire, plane, perpendiculaire au sens 2, d'un insert annulaire coaxial 39 respectif d'un distributeur 40 disposé en arrière de la plaque 10, pour assurer une étanchéité à l'encontre d'un passage de matière thermoplastique à l'état liquide, entre chaque buse 19 et cet insert respectif 39. Les faces avant 38 des inserts 39 associés aux différentes buses 19 sont mutuellement coplanaires et disposés à une même distance en avant d'une face avant plane 41, perpendiculaire au sens 2, du distributeur 40, ce qui situe les faces arrière 35 des différentes buses à une même distance de la face arrière 12 de la plaque arrière 10.

Il est bien entendu, cependant, que la présente invention est compatible avec d'autres modes de coopération entre les buses 19 et le distributeur 40, et par exemple avec le montage solidaire mais amovible de chaque buse 19 sur le distributeur 40, pour exemple par vissage. La face avant 41 du distributeur 40 est ainsi placée parallèlement à la face arrière 12 de la plaque 10, en arrière de celle-ci, et définit avec cette face arrière 12 un espace plat comblé pour l'essentiel, autour des saillies formées par les élargissements 31 des buses 19 et par les inserts 39, par une plaque plate 42 d'isolation thermique et de transmission d'efforts longitudinaux entre les faces 12 et 41.

A l'intérieur du distributeur 40 est aménagé un réseau de canaux transversaux 43 de distribution de la matière thermoplastique à l'état liquide entre les différentes buses 19, et chacun des canaux 43 débouche vers l'avant, et vers l'embouchure 36 du canal 26 de la buse 19 respectivement correspondante, au moins approximativement selon l'axe 120 de celle-ci, par un canal coudé 44 de l'insert 39 respectivement correspondant. Suivant un axe 45 parallèle aux axes 120 et disposé entre ces derniers, de préférence approximativement à une même distance de chacun d'eux, le réseau de canaux 43 du distributeur 40 est raccordé, par un canal longitudinal 46 de celui-ci, à un conduit 47 d'alimentation du distributeur 40 en matière thermoplastique à l'état liquide, lequel conduit 47 est également disposé suivant l'axe 45 et forme une saillie, vers l'arrière, par rapport à une face arrière 48 du distributeur 40, plane et parallèle à la face 41.

Le mode de coopération entre le conduit 47 et le distributeur 40 est bien connu en lui-même d'un Homme du métier, et ne sera pas détaillé. De même, ce conduit 47 et le distributeur 40 sont munis de moyens régulés respectifs 49, 50 de chauffage électrique qui sont bien connus d'un Homme du métier et ne seront pas détaillés.

En arrière du distributeur 40 est disposé un sommier 51 plat, perpendiculaire au sens 2 et présentant vers la face arrière 48 du distributeur 40 une face avant 52 qui est plane et parallèle à la face 48, avec laquelle la face 52 définit un espace plat comblé pour l'essentiel, autour du conduit 47, par une plaque plate 53 d'isolation thermique et de transmission d'efforts longitudinaux entre les faces 48 et 52.

Vers l'arrière, le sommier 51 est délimité par une face arrière 54 qui, dans l'exemple illustré, est également plane et perpendiculaire au sens 2.

Dans toute direction transversale, en particulier au niveau de ses faces avant 52 et arrière 54, le sommier 51 présente des dimensions sensiblement identiques à celles de la matrice 1, en particulier au niveau de ses faces avant 3 et arrière 12, et supérieures à celles du distributeur 40, en particulier au niveau de ses faces avant 41 et arrière 48, et il en est de même des plaques 42 et 53. Autour du distributeur 40 sont intercalées entre celles-ci des cales périphériques 55 à travers lesquelles un assemblage mutuel du sommier 51, de la matrice 1 et des plaques 42 et 53 est assuré par des tirants longitudinaux non référencés, dans des conditions connues d'un Homme du métier.

De façon également connue d'un Homme de métier, le distributeur 40 est retenu simplement par pincement entre les plaques 42 et 53, en direction longitudinale, alors qu'il est retenu en direction transversale, par rapport à la matrice 1 en particulier, d'une part au moyen d'un pion 56 disposé suivant l'axe 45 et emboîté longitudinalement dans une cavité respective, non référencée, de la face 41 du distributeur 40 et de la face 12 de la plaque arrière 10, à travers la plaque 42, et d'autre part au moyen d'une couche 57 d'isolation thermique par rapport aux cales 55, créant avec les plaques 42 et 53 une isolation thermique continue autour du distributeur 40.

Suivant l'axe 45, c'est-à-dire coaxialement au conduit 47 d'alimentation, le sommier 51 est percé de part en part, c'est-à-dire de sa face arrière 54 à sa face avant 51, d'un passage 58 autorisant sa libre traversée par le conduit 47. De même, lorsque les buses 19 sont d'un type à obturation commandée, et comportent à l'intérieur de leur canal 26 une tige longitudinale respective 60, coaxiale, d'obturation commandée de l'orifice d'injection 25 correspondant, cette tige étant guidée au coulissement longitudinal par l'insert 39, avec étanchéité vis-à-vis de la matière thermoplastique à l'état liquide, en arrière du canal coudé 44 et traversant librement la plaque 53 de part en part, le sommier est percé de part en part, suivant chaque axe 120, d'un canal 59 autorisant également un libre passage, parallèlement au sens 2, pour la tige d'obturation 60 respectivement correspondante, et le raccordement de cette tige 60 à des moyens commandés, non illustrés, pour provoquer le passage de chaque tige d'obturation 60 de l'une à l'autre d'une position d'obturation de l'orifice d'injection 25 de la buse 19 correspondante et d'une position d'ouverture de cet orifice d'injection 25, comme on l'a schématisé par une double flèche 61 parallèle au sens 2 ; un tel montage est bien connu en lui-même d'un Homme du métier, et ne sera pas davantage décrit. Il est bien entendu que les buses 19 peuvent également être démunies d'obturateur, d'une façon tout autant compatible avec la mise en oeuvre de la présente invention.

De façon générale, les dispositions qui viennent d'être décrites sont connues d'un Homme du métier, et ne nécessitent par conséquent pas davantage de description.

Par contre, on décrira à présent plus en détail le mode de connexion électrique, quant à lui caractéristique de la présente invention, entre un mode de réalisation préféré des moyens 30 de chauffage et de régulation de température de la buse 19 et, à travers elle, de la matière thermoplastique à l'état liquide transitant par le canal 26, et des moyens 62 électriques d'alimentation commandée en électricité, extérieurs à un ensemble structurel constitué en particulier par la matrice 1, le distributeur 40, le sommier 51 et les buses 19 et généralement intégrés à un pupitre non représenté de commande du dispositif d'injection-moulage.

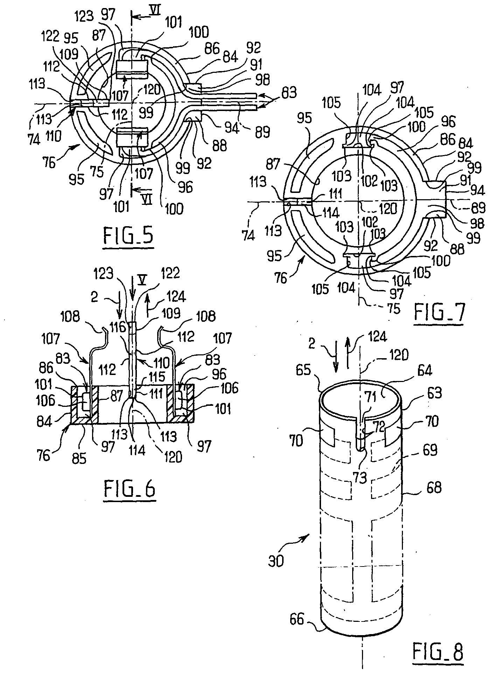

Suivant leur mode de réalisation préféré, auquel on pourrait substituer d'autres modes de réalisation sans que l'on sans sortir pour autant du cadre de la présente invention, les moyens 30 de chauffage et de régulation de température de chaque buse 19 comportent un manchon longitudinal 63 unique, englobant coaxialement la buse correspondante 19 à l'intérieur des passages 20, 21 et 22, à savoir sur la totalité ou la presque totalité de la périphérie extérieure 29 cylindrique de la buse 19. Dans le cas de ce mode de réalisation, ce manchon 63, plus particulièrement visible à la figure 8, présente la forme d'un tube rigide, par exemple métallique, susceptible d'être mis en place par coulissement longitudinal, à force, sur la périphérie extérieure 29 de la buse correspondante 19, dans un sens longitudinal de montage 124 opposé au sens d'injection 2, d'être retenu dans une position longitudinalement déterminée de service sur la périphérie extérieure 29 de la buse 19 par friction sur cette périphérie extérieure 29, et de pouvoir en être ôté si nécessaire par un coulissement relatif dans le sens d'injection 2, cette mise en place et ce retrait du manchon 63 n'exigeant qu'un démontage de la plaque avant 5 et, le cas échéant, de la plaque entretoise 7 de la matrice 1, et s'effectuant par la zone d'extrémité avant 23 de la buse 19.

On se référera plus particulièrement à cette position de service, qui est déterminée avec une tolérance dont la valeur ne dépasse généralement pas quelques millimètres, en direction longitudinale, et, dans laquelle le manchon 63 est retenu par friction sur la périphérie extérieure 29 de la buse 19, pour décrire ce manchon 63 en référence aux figures 1, 2, 3, 4 et 8, qui illustrent tout ou partie du manchon 63 dans cette position de service.

Le manchon 63, réalisé en un matériau rigide et bon conducteur de la chaleur, tel qu'un acier, présente une forme générale de révolution autour d'un axe qui, alors, coïncide avec l'axe 120, vers lequel il présente une périphérie intérieure 64 cylindrique de révolution autour de cet axe avec un diamètre correspondant sensiblement à celui de la périphérie extérieure 29 cylindrique de la buse 19 pour autoriser le coulissement longitudinal relatif et la retenue par friction mutuelle dans la position déterminée de service. On observera que cette retenue par friction mutuelle s'effectue alors par un contact intime entre la périphérie intérieure 64 du manchon 63 et la périphérie extérieure 29 de la buse 19, ce qui établit en outre entre le manchon 63 et la buse 19 une relation de conduction thermique efficace.

Respectivement vers l'avant et vers l'arrière en référence au sens 124, c'est-à-dire vers l'arrière et vers l'avant en référence au sens 2, la périphérie intérieure 64 du manchon 63 se raccorde à un chant respectif 65, 66 de celui-ci, les deux chants 65 et 66 étant annulaires, plans, de révolution autour de l'axe 120 auquel ils sont perpendiculaires. Entre les deux chants 65 et 66, le manchon 63 présente une dimension longitudinale sensiblement égale à celle de la périphérie extérieure cylindrique 29 de la buse 19, de telle sorte que le manchon 63 s'étende sensiblement de la jonction entre les périphéries extérieures tronconique 24 et cylindrique 29 de la buse 19 à la proximité immédiate du raccordement entre la périphérie extérieure cylindrique 29 et l'épaulement 32 de l'extrémité arrière 28 de la buse 19, en enveloppant en particulier une zone d'extrémité arrière 67 de la buse 19, longitudinalement adjacente à l'élargissement 31.

Les deux chants 65 et 66 raccordent la périphérie intérieure 64 du manchon 63 à une périphérie extérieure 68 de celui-ci, laquelle est également cylindrique de révolution autour de l'axe 120 mais présente un diamètre supérieur à celui de la périphérie intérieure 64, bien qu'inférieur aux diamètres respectifs des passages 20,21, 22 dans leur zone correspondant à la périphérie extérieure cylindrique 29 de la buse 19, lorsque le manchon 63 occupe sa position déterminée de service.

Sur la périphérie extérieure 68 du manchon 63 est aménagée une résistance électrique de chauffage par effet Joule, rapportée de façon solidaire, de préférence par sérigraphie ou par tout procédé équivalent, sur la périphérie extérieure 68 et isolée électriquement de toute part, à savoir en particulier vis-à-vis de cette périphérie extérieure 68 et à l'opposé de celle-ci, par des couches de céramique, selon un procédé bien connu en lui-même.

A cet égard, la résistance électrique 69 peut présenter tout trajet voulu sur la périphérie extérieure 68 du manchon 63, par exemple aux fins de chauffer davantage une zone de celui-ci longitudinalement proche de son chant 66 que les zones longitudinalement plus proches du chant 65, étant entendu que la résistance électrique 69 est de préférence ainsi répartie longitudinalement, de façon régulière ou non, sur un maximum de la dimension longitudinale de la périphérie extérieure 68 du manchon 63.

A proximité immédiate du chant 65, tourné vers l'avant en référence au sens de montage 64, c'est-à-dire à un niveau transversal qui, longitudinalement, coïncide avec celui de la zone d'extrémité arrière de la buse 19 lorsque le manchon 63 occupe sa position déterminée de service, la résistance électrique 69 se raccorde à deux plages électriquement conductrices 70 qui peuvent avantageusement être réalisées également par sérigraphie ou par tout autre procédé équivalent et sont isolées électriquement, par exemple par une couche de céramique, vis-à-vis de la périphérie extérieure 68 du manchon 63 mais sont par contre exposées, c'est-à-dire découvertes, dans le sens d'un éloignement radial vis-à-vis de l'axe 120 aux fins de servir à l'alimentation commandée de la résistance électrique 69 en électricité à partir des moyens 62.

Les positions respectives des deux plages 70 sur la périphérie extérieure 68 du manchon 63 sont déterminées d'une part longitudinalement et d'autre part angulairement, en référence à l'axe 120, aussi bien l'une par rapport à l'autre que par rapport à une encoche longitudinale 71 creusée dans le chant 65 et traversant le manchon 63 de part en part, c'est-à-dire de sa périphérie intérieure 64 à sa périphérie extérieure 68, suivant un demi-plan 74 défini par l'axe 120 et pouvant avantageusement constituer, comme c'est le cas dans l'exemple illustré, un plan de symétrie mutuelle entre les deux plages électriquement conductrices 70. Plus précisément, l'encoche 71 est délimitée par deux flancs plans 72 mutuellement parallèles et mutuellement symétriques par rapport au demi-plan 74 et par un fond 73 concave, à savoir par exemple en demi-cercle lorsqu'il est vu suivant une direction radiale en référence à l'axe 120. L'encoche 71 présente ainsi une largeur déterminée, uniforme, entre ses flancs 72, perpendiculairement au demi-plan 74 de symétrie, et elle présente longitudinalement une profondeur également déterminée, entre le chant 65 et le fond 73.

Dans l'exemple illustré, dans lequel le nombre de plages électriquement conductrices 70 est limité à deux, ces plages 70 sont disposées suivant un plan 75 incluant l'axe 120 et perpendiculaire au demi-plan 74, et chacune d'entre elles est symétrique par rapport au plan 75.

Il est bien entendu, toutefois, que d'autres positionnements des plages électriquement conductrices 70 pourraient être choisis sans que l'on sorte pour autant du cadre de la présente invention, en particulier si d'autres plages électriquement conductrices, similaires, étaient aménagées dans des positions respectives également déterminées longitudinalement et angulairement, en référence à l'axe 120, par exemple pour servir au raccordement d'autres composants d'une installation électrique installée sur le manchon 63, à savoir par exemple un thermocouple porté solidairement par la périphérie extérieure 68 ou la périphérie intérieure 64 pour mesurer localement la température du manchon 63 ou de la buse 19 et commander une régulation de température intégrée aux moyens 62.

Une telle variante n'a pas été représentée, mais sa réalisation relève des aptitudes normales d'un Homme du métier.

On observera que les plages électriquement conductrices 70 et l'encoche 71 sont localisées dans une zone longitudinalement extrême du manchon 63 constituant sa zone extrême avant, en référence au sens 124, coïncidant avec la zone extrême arrière 67 de la buse lorsque le manchon occupe sa position déterminée de service.

Comme il ressort de l'examen des figures 1 à 3, cette zone extrême arrière 67 de la buse 19 constitue la zone de celle-ci qui est logée à l'intérieur du passage 22 de la plaque arrière 10 de la matrice 1 et coopère, de façon localisée à proximité immédiate de l'élargissement 31 de la buse 19, avec la rondelle formant ressort 37 coopérant elle-même avec la zone élargie 34 du passage 22 pour prendre appui longitudinalement sur l'épaulement 33 du passage 22, vers l'avant en référence au sens d'injection 2, par rapport auquel s'entendront à nouveau les notions d'avant et d'arrière, sauf exception explicite.

Pour établir avec l'encoche 71 et les plages électriquement conductrices 70 une coopération qui sera décrite par la suite, la matrice 1 porte solidairement, mais de préférence de façon amovible, à l'intérieur du passage 22 des moyens qui vont être décrits à présents, et qui sont avantageusement groupés sur une même bague 76 en matériau électriquement isolant, de forme générale annulaire de révolution autour de l'axe 120, retenue sans possibilité de déplacement relatif, par la face arrière 9 de la plaque entretoise 7, dans une gorge 76, annulaire de révolution autour de l'axe 120, aménagée autour du passage 22, à son raccordement avec la face avant 11 de la plaque arrière 10.

La gorge 77 présente elle-même une forme générale de révolution de l'axe 120, définie par exemple par une face périphérique intérieure 78 cylindrique de révolution autour de l'axe 120, se raccordant vers l'avant, directement, à la face avant 11 de la plaque arrière 10 et vers l'arrière, par un épaulement annulaire, plan, 79, de révolution autour de l'axe 120 auquel il est perpendiculaire en étant tourné vers l'avant, à une autre face périphérique intérieure 80 du passage 22, laquelle est également cylindrique de révolution autour de l'axe 120 mais avec un diamètre inférieur à ceux des faces périphériques intérieures 78 et 117. Vers l'arrière, la face périphérique intérieure 80 se raccorde à l'épaulement 33 d'appui de la rondelle formant ressort 37.

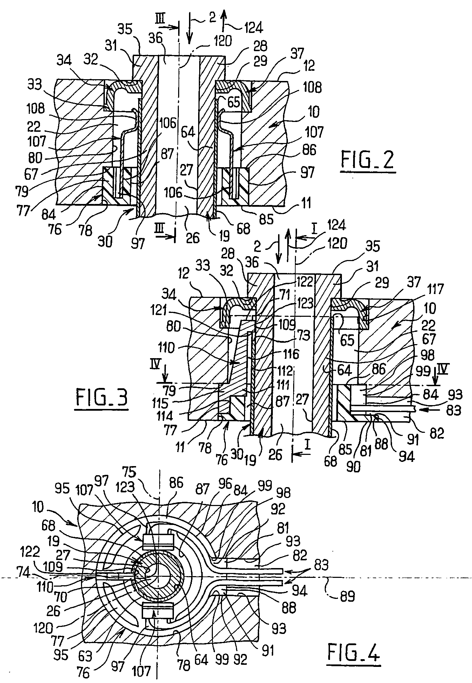

Cependant, comme le montrent les figures 3 et 4, la face périphérique intérieure 78 de la gorge 77 est creusée localement, dans le sens d'un éloignement par rapport à l'axe 120, d'une encoche 81 occupant ainsi une position déterminée, angulairement, en référence à l'axe 120, par rapport à la plaque arrière 10. Cette encoche 81 peut avantageusement constituer une zone extrême d'un canal 82 aménagé en creux dans la face avant 11 de la plaque arrière 10 pour recevoir des conducteurs électriques 83, en nombre approprié, assurant une liaison électrique entre les plages électriquement conductrices 70 du manchon 63 et les moyens électriques 62 d'alimentation commandée, dans des conditions qui ressortiront de la suite de la description.

Si on la considère à l'état ainsi immobilisé en toute direction, c'est-à-dire dans les directions longitudinale, transversale et circonférentielle, à l'intérieur de la gorge 77 de la face avant 11 de la plaque arrière 10, la bague annulaire 76 est délimitée, dans le sens d'un éloignement par rapport à l'axe 120, par une face périphérique extérieure 84 cylindrique de révolution autour de l'axe 120, avec un diamètre sensiblement identique à celui de la face périphérique intérieure 78 de la gorge 77. Longitudinalement, cette face 44 présente des dimensions sensiblement identiques à celles que la gorge 77 présente entre l'épaulement 79 et la face avant 11 de la plaque arrière 10, entre deux chants transversaux 85 et 86, plans, annulaires de révolution autour de l'axe 120 auquel ils sont perpendiculaires, le chant 85 étant tourné vers l'avant et coplanaire de la face avant 11 de la plaque arrière 10 alors que le chant 86 est tourné vers l'arrière et prend appui contre l'épaulement 79 de la gorge 77.

Vers l'axe 120, chacune des faces annulaires transversales 85, 86 se raccorde à une même face périphérique intérieure 87 de la bague 76, laquelle face 87 est cylindrique de révolution autour de l'axe 120, vers lequel elle est tournée, et présente un diamètre inférieur à celui de la face périphérique intérieure 80 du passage 22 mais supérieur à celui de la périphérie extérieure 68 du manchon 3, si l'on considère celui-ci alors qu'il porte une installation électrique telle que la résistance électrique 69 et les plages 70 électriquement conductrices, ou tout autre composant d'une installation électrique, tel qu'un thermocouple.

A fortiori, le diamètre de la face périphérique intérieure 87 est supérieur à celui de la périphérie extérieure cylindrique 29 de la buse 19.

En outre, par exception à son caractère général de révolution autour de l'axe 120, la bague annulaire 76 porte de façon localisée angulairement, en référence à l'axe 120, en saillie sur sa face périphérique extérieure 84 à proximité immédiate du chant 85, un doigt 88 orienté radialement en référence à l'axe 120 et présentant, en référence à celui-ci, un développement angulaire sensiblement identique à celui de l'encoche 81 de la face avant 11 de la plaque arrière 10. Vers l'avant, ce doigt 88 est délimité par une face transversale plane 90 prolongeant coplanairement le chant 85, et affleure donc coplanairement la face avant 11 de la plaque arrière 10 au niveau de l'encoche 81, et il présente une dimension longitudinale, ou épaisseur, inférieure aux dimensions correspondantes de l'encoche 81 de façon à autoriser le passage des conducteurs électriques 83, entre sa face 90 et une autre face transversale, plane, 91, délimitant le doigt 88 vers l'arrière, à un niveau transversal intermédiaire entre les niveaux respectifs des chants 85 et 86. En direction circonférentielle, le doigt 88 est délimité, entre les deux faces transversales 90 et 91, par des flancs plans 92, mutuellement parallèles et mutuellement symétriques par rapport à un demi-plan 89 défini par l'axe 120 et prolongeant coplanairement le demi-plan 74, à l'opposé de celui-ci par rapport à l'axe 120, ces flancs 92 étant en appui, en direction circonférentielle, sur des flancs respectivement complémentaires 93 de l'encoche 81, pour empêcher toute possibilité de rotation relative autour de l'axe 120. Dans le sens d'un éloignement par rapport à celui-ci, le doigt 88 présente des dimensions juste suffisantes pour s'engager dans l'encoche 81 en assurant ainsi cette immobilisation à l'encontre d'une rotation relative, et il est délimité par un chant plan 94 perpendiculaire au demi-plan 89.

Alors que le chant 85 de la bague annulaire 76 est continu, lisse, son chant 86 est creusé longitudinalement, à un niveau radial intermédiaire entre ceux de la face périphérique extérieure 84 et de la face périphérique intérieure 87, de gorges en arc de cercle centrées sur l'axe 120, à raison de :
- deux gorges 95 présentant en référence à l'axe 120 un développement angulaire inférieur à 90° mais proche de 90° et situées du même côté du plan 75 que le demi-plan 74, par rapport auquel elles sont mutuellement symétriques en étant disposées respectivement de part et d'autre de celui-ci, ces gorges 95 ne débouchant que dans le chant 86 de la bague 76 et ayant pour fonction essentielle d'alléger cette dernière, et
- d'une gorge 96 chevauchant symétriquement le demi-plan 89 et s'étendant ainsi, sur un peu plus de 180°, de l'une à l'autre de deux extrémités circonférentielles 97 situées l'une et l'autre du même côté du plan 75 que le demi-plan 74, et mutuellement symétriques par rapport à celui-ci.

Au contraire des gorges 95, la gorge 96 débouche non seulement dans le chant 86 de la bague 76, mais également, suivant le demi-plan 89, dans la face périphérique extérieure 84, par une encoche 98 creusée longitudinalement dans le chant 86, présentant comme fond un prolongement coplanaire de la face 91 du doigt 88 et d'un fond transversal plan, non référencé, de la gorge 96. L'encoche 98 est par ailleurs délimitée circonférentiellement, en référence à l'axe 120, par des flancs 99 mutuellement symétriques par rapport au demi-plan 89 et située coplanairement avec l'un et l'autre des flancs 93 de l'encoche 81, respectivement, de telle sorte que les encoches 98 et 81 soient placées directement en regard l'une de l'autre, suivant la direction radiale en référence à l'axe 120, de même que, au moins pour partie, longitudinalement, c'est-à-dire communiquent et autorisent ainsi le passage des conducteurs électriques 83 vers l'intérieur de la gorge 96, de part et d'autre du demi-plan 89.

Dans l'exemple illustré, les conducteurs électriques 83 étant au nombre de deux, comme le sont les plages électriquement conductrices 70 à raccorder électriquement aux moyens électriques 62 d'alimentation commandée, chacun d'entre eux s'achemine ainsi vers l'une, respective, des extrémités 97 de la gorge 96 en restant localisé longitudinalement entre les chants 85 et 86 de la bague annulaire 76.

A proximité de ces deux extrémités 97, du même côté du plan 75 que le demi-plan 89, la gorge 96 présente un rétrécissement localisé 100 pinçant l'un, respectif, des connecteurs électriques 83 pour assurer sa retenue dans la gorge 96, à proximité d'une extrémité respective 101 de ce connecteur 83, logée dans l'extrémité correspondante 97 de la gorge 96.

A chacune de ses extrémités 97, la gorge 96 présente une conformation visible à la figure 7, d'où il ressort qu'elle y est délimitée, vers l'axe 120, par un flanc plan respectif 102 parallèle aux deux demi-plans 74 et 89, par rapport auxquels les deux flancs 102 sont mutuellement symétriques, alors que chacun d'entre eux est symétrique par rapport au plan 75, qu'il coupe perpendiculairement.

Dans le sens d'un éloignement par rapport à ce plan 75, de part et d'autre de celui-ci, le flanc 102 se raccorde à deux autres flancs 103 plans, parallèles au plan 75 et mutuellement symétriques par rapport à celui-ci, vers lequel ils sont tournés. Chacun de ces flancs 103 se raccorde au flanc 102 correspondant dans le sens d'un rapprochement vis-à-vis des deux demi-plans 74 et 89 alors que, dans le sens d'un éloignement par rapport à ces deux demi-plans, il se raccorde à un flanc respectif 104 plan, parallèle aux demi-plans 74 et 89 et au flanc 102, de façon à définir des formes en contre-dépouille de part et d'autre de ce flanc 102, lorsqu'on considère la bague 76 dans une vue en plan, suivant l'axe 120, comme c'est le cas à la figure 7.

Vers le plan 75, les deux flancs 104 correspondant à un même flanc 102 se raccordent à un flanc respectif 105 plan et parallèle au plan 75, par rapport auquel les deux flancs 105 correspondant à un même flanc 102 occupent des positions mutuellement symétriques. Le flanc 105 situé du même côté du plan 75 que le demi-plan 89 est plus court, perpendiculairement aux demi-plans 74 et 89, que le flanc 105 situé du côté du demi-plan 74, et définit partiellement le rétrécissement 100 correspondant de la gorge 96 en se raccordant par l'intermédiaire de ce rétrécissement 100 à un flanc radialement intérieur, non référencé, de cette gorge 96 alors que l'autre flanc 105, situé du côté du plan 75 correspondant au demi-plan 74, ferme circonférentiellement la gorge 96 et se raccorde à un flanc radialement extérieur, non référencé, de celle-ci, ces flancs radialement intérieur et radialement extérieur de la gorge 96 présentant la forme respective de parties de cylindres de révolution autour de l'axe 120 et raccordant le fond non référencé de la gorge 96 au chant 86 de la bague annulaire 76.

Par les formes en contre-dépouille ainsi aménagées à chacune de ses extrémités 97, la gorge 96 reçoit par emboîtement parallèlement à l'axe 120 et retient par pincement et friction une extrémité 106 d'une lame électriquement conductrice 107 respective, orientée longitudinalement et présentant une forme plate, sensiblement parallèle aux deux demi-plans 74 et 89, au niveau de cette extrémité 106 ainsi que sur l'essentiel de sa dimension longitudinale, laquelle est suffisante pour que cette lame 107 fasse saillie dans le sens 124 par rapport au chant 86 de la bague annulaire 76. Chaque lame 107 présente une flexibilité élastique qui, comme le comprendra aisément un Homme du métier, est ainsi orientée suivant une direction perpendiculaire aux deux demi-plans 74 et 89 dont, en particulier, les lames 107 peuvent s'écarter élastiquement par une deuxième extrémité 108, quant à elle libre, ainsi décalée dans le sens 124 par rapport à l'extrémité 106 de solidarisation avec la bague annulaire 76 et par rapport au chant 86 de celle-ci.

Un Homme du métier comprendra également aisément que chaque lame 107 est également perpendiculaire au plan 75, par rapport auquel elle est en outre respectivement symétrique, chacune des deux lames 107 étant délimitée dans le sens d'un éloignement par rapport à ce plan 75 par un chant respectif non référencé, plan, parallèle à ce plan 75 par rapport auquel les deux chants d'une même lame 107 sont mutuellement symétriques.

Les lames 107 sont elles-mêmes mutuellement symétriques par rapport aux demi-plans 74 et 89, en particulier lorsqu'elles sont au repos, c'est-à-dire ne subissent aucune contrainte dans le sens d'un fléchissement, en particulier dans le sens d'un éloignement par rapport aux deux demi-plans 74 et 89, comme on l'a illustré aux figures 5 et 6.

Au niveau de l'extrémité 106 de chaque lame 107 est fixée sur cette dernière, dans des conditions créant une relation de conduction électrique, à savoir par exemple par soudure, une extrémité 101 d'un connecteur 83 correspondant, alors que les extrémités 108 sont destinées à établir un contact électrique, par appui élastique, avec l'une, respective, des plages électriquement conductrices 70 du manchon 63.

A cet effet, de préférence, chaque extrémité 108 présente lorsqu'elle est vue perpendiculairement aux demi-plans 74 et 89, comme c'est le cas à la figure 6 ou à la figure 2, une conformation incurvée vers ces demi-plans 74 et 89, à savoir plus précisément convexe, pour parvenir lorsque la lame 107 est au repos à une distance de l'axe 120 légèrement inférieure à la moitié du diamètre de la face périphérique extérieure 68 du manchon 63, augmenté de l'épaisseur généralement négligeable des plages électriquement conductrices 70. En outre, chaque extrémité 108 occupe à l'intérieur du passage 22 une position qui, en direction longitudinale, en direction circonférentielle et suivant une direction transversale perpendiculaire aux demi-plans 74 et 89, est déterminée et choisie, en l'absence de fléchissement élastique des lames 107, de telle sorte que, dans toutes ces directions mais moyennant un léger fléchissement des lames 107, au niveau de leurs extrémités 108, dans le sens d'un éloignement par rapport aux deux demi-plans 74 et 89, jusqu'à ce que ces extrémités 108 se trouvent à une distance identique à la moitié du diamètre de la face périphérique extérieure cylindrique 68 du manchon 63 augmenté de l'épaisseur des plages électriquement conductrices 70, elle coïncide avec la position qu'occupe respectivement l'une des plages électriquement conductrices 70 lorsque le manchon 63 occupe sa position de service sur la buse 19 en présentant une orientation angulaire déterminée, autour de l'axe 120, par rapport à la bague annulaire 76 et à la matrice 1 considérée dans son ensemble.

Pour empêcher qu'un contact puisse s'établir entre les lames 107 et les plages électriquement conductrices 70 si cette orientation déterminée n'est pas respectée, au risque d'entraîner des détériorations, voire des accidents, surtout lorsque les plages 70 et les lames 107, prévues en plus de deux exemplaires respectivement, sont affectées à des fonctions différentes telles que l'alimentation de la résistance électrique 69 en électricité et la sortie de signaux fournis par un thermocouple, à savoir plus précisément pour empêcher le manchon 63 de coulisser dans le sens 124, sur la buse 19, jusqu'à sa position de service s'il ne présente pas cette orientation déterminée, sont prévus des moyens de détrompage qui, en ce qui concerne le manchon 63, sont constitués par l'encoche 71 dont la position angulaire, en référence à l'axe 120, par rapport aux plages électriquement conductrices 70 est déterminée.

Sur la bague annulaire 76, ces moyens de détrompage sont constitués par un doigt 109 rapporté solidairement sur celle-ci et formant par rapport à sa face périphérique intérieure 87, ou à un prolongement géométrique cylindrique de celle-ci comme c'est le cas dans l'exemple illustré, une saillie vers l'axe 120, jusqu'à une distance de cet axe 120 qui est comprise entre les moitiés respectives du diamètre de la périphérie extérieure 68 du manchon 63 et de celui de la périphérie intérieure 64 de celui-ci, et avantageusement sensiblement égale à la moitié du diamètre de la périphérie intérieure 64 du manchon 63 ou de la périphérie extérieure 29 de la buse 19, dans une position déterminée longitudinalement et en direction circonférentielle de telle sorte que :
- le doigt 109 s'engage dans l'encoche 71 du manchon 63 pour permettre à celui-ci de coulisser dans le sens 124, sur la buse 19, jusqu'à sa position de service s'il occupe l'orientation déterminée précitée, et puisse venir buter contre le fond 73 de l'encoche 71 pour fixer une limite à ce coulissement, compte tenu des tolérances admissibles en direction longitudinale quant au respect de la position de service, de façon à éviter que le chant 65 du manchon 63 vienne buter contre la rondelle élastique 37, et qu
- si l'on fait coulisser le manchon 63 dans le sens 124 de la buse 19 pour tenter de l'amener à sa position de service alors qu'il ne présente pas ladite orientation déterminée, ce soit le chant 65 du manchon 63 qui vienne buter dans le sens 124 contre le doigt 109 qui, ainsi, assure alors une retenue du manchon 63 dans une position décalée longitudinalement, en sens opposé au sens 124, par rapport à sa position de service et telle que le contact ne puisse s'établir entre l'une ou l'autre des extrémités 108 des lames 107 et l'une ou l'autre des plages électriquement conductrices 70.

La conformation du doigt 109 et son mode de liaison solidaire avec la bague 76 peuvent varier dans une large mesure sans que l'on sorte pour autant du cadre de la présente invention.

Dans l'exemple illustré, pour faciliter la fabrication de la bague 76, le doigt 109 constitue une partie d'une pièce plate 110 disposée suivant le demi-plan 74 et rapportée solidairement sur la bague 76, par exemple par emboîtement solidaire à l'intérieur d'une fente plate 111 aménagée dans le chant 86 de celle-ci, suivant ce même demi-plan 74, et débouchant d'une part dans le chant 86 et d'autre part dans chacune des périphéries 84 et 87 de la bague 76.

Plus précisément, la pièce 110 présente deux faces principales planes 112 mutuellement parallèles, disposées respectivement de part et d'autre du demi-plan 74, auquel elles sont parallèles, et mutuellement symétriques par rapport à ce plan 74. Ces deux faces principales 112 sont mutuellement espacées, perpendiculairement au plan 74, d'une dimension ou épaisseur sensiblement égale à la distance séparant mutuellement les deux flancs 72 de l'encoche 71 du manchon 63, bien que de préférence légèrement inférieure à cette distance afin de faciliter un coulissement longitudinal de l'encoche 71 le long du doigt 109 lorsque l'on déplace le manchon 63 dans le sens 124 le long de la buse 19, alors que le manchon 63 occupe ladite orientation déterminée, en référence à l'axe 120, par rapport à la matrice 1 et en particulier par rapport au doigt 109, qui est solidarisé avec celle-ci, de façon amovible, par l'intermédiaire de la bague annulaire 76 au même titre que les extrémités 106 des lames 107.

Complémentairement, la fente 111 est délimitée, dans le sens d'un éloignement par rapport au demi-plan 74, par deux flancs 113 plans, parallèles au demi-plan 74 et mutuellement symétriques par rapport à celui-ci, perpendiculairement auquel ces deux flancs 113 sont espacés d'une distance ou largeur sensiblement égale à l'épaisseur de la pièce 110 mesurée entre ses faces principales 112.

Les flancs 113 de la gorge 111 se raccordent aux faces périphériques extérieure et intérieure 87, 84 de la bague annulaire 76, en direction transversale, alors qu'ils se raccordent en direction longitudinale d'une part au chant 86 et d'autre part à un fond 114 de la gorge 111, lequel forme entre les faces périphériques intérieure 87 et extérieure 84 un gradin entre deux parties planes, non référencées, perpendiculaires à l'axe 120 et adjacentes respectivement à la périphérie intérieure 87 et à la périphérie extérieure 84, sous forme d'une partie longitudinale plane, également non référencée, perpendiculaire au demi-plan 74, de façon à déboucher dans la face périphérique extérieure 84 plus près du chant 85 que dans la face périphérique intérieure 87.

Complémentairement, la pièce 110 comporte entre ses faces 112 un talon 115 qui, lorsqu'il est vu perpendiculairement au demi-plan 74, présente un contour qui épouse le fond 114, complète les faces périphériques extérieure 84 et intérieure 87 en regard de la fente 111 et épouse une zone de l'épaulement 79 de la gorge 77, coplanairement au chant 86 de la bague annulaire 76, en regard de la fente 111 de telle sorte que, par effet d'emboîtement, le talon 115 soit verrouillé à l'intérieur de la fente 111, pour assurer une solidarisation mutuelle de la pièce et de la bague annulaire 76 même en l'absence d'autres moyens de solidarisation mutuelle entre elles.

Pour des raisons de dimensionnement longitudinal comparé de la plaque arrière 10 de la matrice 1, de la gorge 77 de cette plaque arrière 10, et de l'encoche 71 du manchon 63, dans l'exemple illustré, la pièce 110 présente une forme oblongue longitudinalement, et le doigt 109 en constitue une partie extrême, décalée, dans le sens 124, par rapport au talon 115 qui en constitue une partie extrême, longitudinalement opposée, à laquelle le doigt 109 est relié par une partie intermédiaire 116 de la pièce 110. Entre les faces 112, lorsqu'elle est vue perpendiculairement au demi-plan 74, cette partie intermédiaire 116 présente un contour qui s'affine dans le sens 124, entre un prolongement longitudinal de la face périphérique intérieure 87 de la bague annulaire 76, du côté de l'axe 120, et un bord incliné, se rapprochant de l'axe 120 dans .le sens 124, du côté opposé à l'axe 120.

Le contour du doigt 109, lorsqu'il est vu perpendiculairement au demi-plan 74, est quant à lui défini par deux chants plans 121, 122 perpendiculaires à l'axe 120, tournés respectivement en sens opposé au sens 124 et dans ce sens 124 et se raccordant, dans le sens d'un éloignement par rapport à l'axe 120, respectivement au prolongement précité de la face périphérique intérieure et au bord oblique précité, et par une face extrême 123 tournée vers l'axe 120, parallèle au plan 75 et raccordant mutuellement les chants 121 et 122 en étant décalée vers l'axe 120 par rapport à la face périphérique intérieure 87 de la bague annulaire 76. Plus précisément, cette face 123 est disposée à une distance de l'axe 120 inférieure à la moitié du diamètre de la périphérie extérieure 68 du manchon 63 et au moins égale, et de préférence sensiblement égale, comme on l'a illustré, à la moitié du diamètre de la périphérie intérieure 64 du manchon 63 ou de la périphérie extérieure 29 de la buse 19.

Longitudinalement, la pièce 110 est dimensionnée de telle sorte que le chant 122 du doigt 109 reste placé en retrait, dans le sens 2, par rapport à la rondelle élastique 37.

Comme le comprendra aisément un Homme du métier, si l'on fait coulisser le manchon 63 dans le sens 124 sur la buse 19 en le plaçant dans l'orientation déterminée précitée, dans laquelle son encoche 71 est coplanaire au doigt 109, elle peut atteindre la position de service, dans laquelle les extrémités libres 108 des lames 107, légèrement écartées de l'axe 120 par le chant 65 lorsque celui-ci parvient à leur niveau puis maintenues en précontrainte élastique de flexion lorsqu'elles coulissent ensuite sur la périphérie extérieure 68 du manchon 63, viennent s'appliquer fermement respectivement contre l'une et l'autre des plages électriquement conductrices 70, en se plaçant en relation de conduction électrique avec elles. Le fond 73 de l'encoche 71 peut alors venir buter dans le sens 124 contre le chant 121 du doigt 109, ou en rester légèrement écarté longitudinalement comme il est illustré à la figure 3. Le chant 121 du doigt 109 est de préférence positionné longitudinalement, compte tenu du dimensionnement longitudinal de l'encoche 71, de telle sorte que le chant 65 reste placé en retrait, dans le sens 2, par rapport à la rondelle élastique 37 même lorsque le fond 73 de l'encoche 71 vient buter contre ce chant 121.

Si, par contre, l'on fait accomplir ce mouvement de coulissement au manchon 63 alors qu'il ne présente pas l'orientation déterminée requise, dans laquelle l'encoche 71 est coplanaire à la pièce 110, c'est le chant 65 du manchon 63 qui vient buter dans le sens 124 contre le chant 121 du doigt 109, et les dimensions longitudinales respectives des plages électriquement conductrices 70, de l'extrémité libre 108, incurvée, des lames de contact 107 et la valeur du décalage longitudinal entre la position de service du manchon 63 et la position qu'il occupe lorsqu'il vient ainsi en butée par son chant 65 contre le chant 121 du doigt 109, c'est-à-dire la dimension longitudinale de la fente 71 et la position longitudinale du chant 121 du doigt 109, sont choisies de telle sorte qu'alors, le contact ne puisse s'établir entre les extrémités libres 108 des lames 107, à savoir plus généralement ces lames 107, et les plages électriquement conductrices 70.

Ainsi, ce n'est que dans la position de service, ou dans des positions longitudinalement proches de celle-ci, exclusivement autorisées par engagement de l'encoche 71 sur le doigt 109, que peut s'établir le contact de conduction électrique entre les lames 107 et les plages électriquement conductrices 70.

Un Homme du métier comprendra aisément qu'il en serait de même si un nombre de plages électriquement conductrices 70 supérieur à deux, occupant ou non une même position longitudinale sur la périphérie extérieure 68 du manchon 63 et réparties en direction circonférentielle, en référence à l'axe 120, et un nombre correspondant, supérieur à deux, de lames 107 présentant des extrémités libres 108 dans des positions respectivement correspondantes, étaient prévus par exemple aux fins d'alimenter une résistance électrique 69 de chauffage, ainsi que de servir à la transmission d'informations entre un thermocouple porté par le manchon 63 et des appareils de mesure et de régulation intégrés aux moyens 62 d'alimentation électrique commandée, un nombre de connecteurs électriques 83 en rapport étant naturellement prévu dans ce cas.

Il est bien entendu que d'autres conformations de la bague annulaire 76, du doigt 109 et des lames électriquement conductrices 107, ainsi que d'autres modes de liaison solidaire du doigt 109 et des lames électriquement conductrices 107 avec la matrice 1, par l'intermédiaire de la bague annulaire 76 ou par d'autres moyens, pourraient être choisis, sans que l'on sorte pour autant du cadre de la présente invention, pour procurer un même effet de détrompage, n'autorisant une connexion électrique de chacune des lames 107 avec une plage électriquement conductrice 70 correspondante qu'à la condition qu'une position longitudinale relative et une orientation relative soient respectées.

De façon plus générale, un Homme du métier comprendra aisément que le mode de réalisation d'un dispositif d'injection selon l'invention qui vient d'être décrit ne constitue qu'un exemple non limitatif par rapport auquel on pourra prévoir de nombreuses variantes sans sortir pour autant du cadre de la présente invention qui est defini par les revendications, en particulier en termes de nombre d'empreintes telles que 4, de nombre de buses telles que 19, associées à chaque empreinte telle que 4, de conception générale et de montage des buses 19, de la matrice 1, du distributeur 40, du sommier 51, de réalisation pratique des moyens de chauffage 30, de mode de liaison mécanique fixe d'une extrémité 106 des lames 107 avec la matrice 1 et du mode de détrompage pour faire en sorte que le manchon 63, quel que soit son mode de réalisation, ne puisse atteindre sa position de service qu'à la condition d'occuper une orientation déterminée, autour de l'axe 120 de la buse 19, par rapport à la matrice 1 et pour faire en sorte que la connexion électrique entre les lames de contact 107 et les plages électriquement conductrices 70 du manchon 63 ne puisse s'établir qu'à la condition que la position de service ait été atteinte, ce qui implique que l'on ait respecté cette orientation déterminée du manchon 63, autour de l'axe 120 de la buse 19, par rapport à la matrice 1.

## Revendications

1. Dispositif d'injection d'une matière thermoplastique à l'état liquide dans une empreinte de moulage (4), comportant, en référence à un sens longitudinal déterminé (2) d'injection :
- une matrice rigide (1), présentant une face avant (3) délimitant partiellement l'empreinte de moulage (4), une face arrière (12) et au moins un passage longitudinal (20, 21, 22) traversant la matrice (1), de sa face arrière (12) à sa face avant (3), suivant un axe longitudinal déterminé (120),
- une buse longitudinale d'injection (19), disposée coaxialement à l'intérieur dudit passage (20, 21, 22) et présentant une zone d'extrémité arrière (67) et une zone d'extrémité avant (23), respectivement adjacentes à ladite face arrière (12) et à ladite face avant (3), une périphérie intérieure longitudinale (27) délimitant un canal longitudinal (26) débouchant dans la zone d'extrémité arrière (67) et dans la zone d'extrémité avant (23) et une périphérie extérieure longitudinale (29),
- des moyens d'alimentation (40, 47) de la buse (19) en matière thermoplastique à l'état liquide, situés en arrière de ladite face arrière (12) et reliés mécaniquement à la matrice et fluidiquement audit canal (26) dans la zone d'extrémité arrière (67) de la buse (19),
- un manchon longitudinal de chauffage (63) enveloppant coaxialement la buse (19) à l'intérieur dudit passage (20, 21, 22), portant solidairement une installation électrique (69) incluant une résistance électrique (69) de chauffage par effet Joule et présentant une périphérie intérieure longitudinale (64) en contact intime de conduction thermique et de retenue par friction, dans une position relative longitudinalement déterminée de service, avec la périphérie extérieure (29) de la buse (19) et une périphérie extérieure longitudinale (68) portant solidairement un nombre déterminé de plages électriquement conductrices (70) reliées électriquement à ladite installation électrique (69) et occupant des positions respectives longitudinalement et circonférentiellement déterminées sur la périphérie extérieure (68) du manchon (63), le manchon (63) étant susceptible d'être amené à sa position relative longitudinalement déterminée de service par coulissement longitudinal sur la buse (19) dans un sens longitudinal déterminé de montage (124), et
- des moyens (83, 107) de liaison électrique entre lesdites plages électriquement conductrices (70) et des moyens électriques (62) d'alimentation commandée de ladite résistance électrique (69) en électricité, tel que
- la matrice (1), à l'intérieur dudit passage (20, 21, 22), et le manchon (63) présentent solidairement des moyens respectifs de détrompage (71, 109), aptes à s'emboîter mutuellement lorsque le manchon (63) coulisse longitudinalement sur la buse (19) dans ledit sens de montage (124) en occupant une orientation angulaire déterminée, en référence audit axe (120), par rapport à la matrice (1), pour permettre au manchon (63) d'atteindre alors ladite position longitudinalement déterminée de service, et à constituer des moyens de butée pour le manchon (63) dans ledit sens de montage (124) dans ladite position longitudinalement déterminée de service, lorsque le manchon (63) occupe ladite orientation angulaire déterminée, et dans une position décalée longitudinalement par rapport à ladite position longitudinalement déterminée de service, vers l'amont en référence audit sens de montage (124), lorsque le manchon (63) occupe une orientation différente de ladite orientation angulaire déterminée, en référence audit axe (120), pour empêcher le manchon (63) d'atteindre alors ladite position longitudinalement déterminée de service,
- les moyens de liaison électrique (83, 107) comportent ledit nombre déterminé de lames de contact (107), électriquement conductrices et mutuellement isolées, dont chacune correspond à l'une, respective, desdites plages électriquement conductrices (70) et présente une première extrémité (108) et une deuxième extrémité (106) décalée par rapport à la première extrémité (108), fixe par rapport à la matrice (1) et raccordée électriquement auxdits moyens électriques (62) d'alimentation commandée, chaque lame (107) étant élastiquement flexible; la première extrémité (108) de la lame s'appliquant fermement, dans une relation de conduction électrique, contre la plage électriquement conductrice (70) correspondante, moyennant une contrainte élastique transversale de la lame (107), lorsque le manchon (63) occupe ladite position longitudinale déterminée de service et ladite orientation angulaire déterminée,
**caractérisé en ce que** ces lames sont des lames longitudinales dont chacune présente une premiére extrémité, libre, occupant à l'intérieur dudit passage (20, 21, 22) une position longitudinalement et circonférentiellement déterminée, correspondant à celle qu'occupe la plage électriquement conductrice (70) correspondante lorsque le manchon (63) occupe ladite position longitudinalement déterminée de service et ladite orientation angulaire déterminée, par rapport à la matrice (1),
- et les dimensions longitudinales respectives des plages électriquement conductrices (70), des premières (108) extrémités des lames de contact (107) et du décalage entre ladite position longitudinalement décalée du manchon (63) et ladite position longitudinalement déterminée de service du manchon (63) sont choisies telles que, dans ladite position longitudinalement décalée du manchon, les plages électriquement conductrices (70) soient décalées longitudinalement par rapport aux premières extrémités (108) des lames de contact (107) et que ladite relation de conduction électrique ne puisse alors être établie.

2. Dispositif d'injection selon la revendication 1, **caractérisé en ce que** les premières (108) et deuxièmes (106) extrémités des lames (107) sont respectivement des extrémités aval (108) et des extrémités amont (106) de celles-ci, en référence au sens de montage.

3. Dispositif d'injection selon l'une quelconque des revendications 1 et 2, **caractérisé en ce que** le sens de montage (124) est opposé au sens d'injection (2) et **en ce que** les moyens de détrompage (71, 109) sont localisés dans des zones du manchon (63) et de la matrice (1), respectivement, correspondant à la zone d'extrémité arrière (67) de la buse (19).

4. Dispositif d'injection selon l'une quelconque des revendications 1 à 3, **caractérisé en ce que** les moyens de détrompage (71, 109) comportent une encoche longitudinale (71) aménagée dans un chant transversal (65) du manchon (63), tourné vers l'avant en référence au sens de montage (124), et un doigt transversal (109) fixe par rapport à la matrice (1) et formant une saillie vers l'axe (120) à l'intérieur dudit passage (20, 21, 22), dans une position telle qu'il s'emboîte dans ladite encoche (71) lorsque le manchon (63) occupe ladite position longitudinalement déterminée de service et ladite orientation déterminée, en référence audit axe (120), et, de préférence, puisse alors venir buter longitudinalement contre un fond (73) de l'encoche (71), et bute contre ledit chant (65) du manchon (63) en empêchant le manchon (63) d'atteindre ladite position longitudinalement déterminée de service lorsqu'on le fait coulisser longitudinalement sur la buse (19), dans le sens de montage (124), alors qu'il occupe une orientation angulaire différente de ladite orientation angulaire déterminée, en référence audit axe (120).

5. Dispositif d'injection selon l'une quelconque des revendications 1 à 4, **caractérisé en ce que** les deuxièmes extrémités (106) des lames de contact (107) sont fixées solidairement à une bague annulaire (76), en matériau électriquement isolant, entourant localement ledit passage (20, 21, 22) et elle-même fixée à la matrice (1).

6. Dispositif d'injection selon la revendication 5, **caractérisé en ce** en ce que la matrice (1) comporte au moins deux composants transversaux (7, 10), plats, mutuellement accolés par des faces transversales (9, 11), planes, respectives, définissant ensemble, autour dudit passage (20, 21, 22), une gorge annulaire de réception de ladite bague annulaire (77) et d'immobilisation de celle-ci dans les directions longitudinale, transversale et circonférentielle.

7. Dispositif d'injection selon la revendication 6, **caractérisé en ce que** la bague annulaire (76) et ladite gorge (77) présentent des formes générales respectives de révolution autour dudit axe (120) et mutuellement complémentaires, et comportent des moyens (81, 88) d'indexage en direction circonférentielle.

8. Dispositif d'injection selon la revendication 7, **caractérisé en ce que** les moyens (81, 88) d'indexage en direction circonférentielle comportent d'une part un doigt transversal (88) fixe par rapport à la bague (76) et formant une saillie dans le sens d'un éloignement par rapport à l'axe (120) et d'autre part, dans l'un (10), au moins, desdits composants (7, 10), une encoche (81) de réception dudit doigt (88).

9. Dispositif d'injection selon la revendication 8, **caractérisé en ce que** ladite encoche (81) de l'un (10), au moins, des composants (7, 10) de la matrice (1) constitue une zone extrême d'un canal (82) aménagé dans ledit composant (10) et logeant des conducteurs électriques (83) de liaison entre les deuxièmes extrémités (106) des lames électriquement conductrices (107) et les moyens électriques (62) d'alimentation commandée.

10. Dispositif d'injection selon l'une quelconque des revendications 5 à 9, **caractérisé en ce que** ladite bague annulaire (76) porte solidairement les moyens de détrompage (109) correspondant à la matrice (1).

## Claims

1. A device for injecting a thermoplastic material in a liquid state into a moulding cavity (4) comprising, in reference to a determined longitudinal injection direction (2):
- a rigid matrix (1), having a front face (3) partially defining the moulding cavity (4), a rear face (12) and at least one longitudinal passage (20, 21, 22) going through the matrix (1), from its rear face (12) to its front face (3), along a determined longitudinal axis (120),
- a longitudinal injection nozzle (19), arranged coaxially to the inside of said passage (20, 21, 22) and having a rear end zone (67) and a front end zone (23) adjacent to said rear face (12) and said front face (3), respectively, a longitudinal interior periphery (27) defining a longitudinal channel (26) opening into the rear end zone (67) and into the front end zone (23) and a longitudinal exterior periphery (29),
- means (40, 47) for supplying the nozzle (19) with thermoplastic material in a liquid state, situated behind said rear face (12) and connected mechanically to the matrix and fluidly to said channel (26) in the rear end zone (67) of the nozzle (19),
- a longitudinal heating sleeve (63) coaxially surrounding the nozzle (19) inside said passage (20, 21, 22), integrally supporting an electrical installation (69) including an electrical resistor (69) for heating via Joule effect and having a longitudinal interior periphery (64) in close thermal-conduction and frictional holding contact, in a longitudinally determined relative service position, with the exterior periphery (29) of the nozzle (19) and a longitudinal exterior periphery (68) integrally holding a determined number of electrically conductive plates (70) electrically connected to said electrical installation (69) and occupying respective longitudinally and circumferentially determined positions on the exterior periphery (68) of the sleeve (63), the sleeve (63) being capable of being brought to its longitudinally determined relative service position by longitudinal sliding on the nozzle (19) in a determined longitudinal assembly direction (124), and
- electrical connection means (83, 107) between said electrically conductive plates (70) and electrical controlled-supply means (62) for supplying said electrical resistor (69) with electricity, such that
- the matrix (1), inside said passage (20, 21, 22), and the sleeve (63) integrally have respective biasing means (71, 109), capable of mutually fitting together when the sleeve (63) slides longitudinally on the nozzle (18) in said assembly direction (124) while occupying a determined angular orientation, in reference to said axis (120), in relation to the matrix (1), to allow the sleeve (63) to then reach said longitudinally determined service position, and to constitute stop means for the sleeve (63) in said assembly direction (124) in said longitudinally determined service position, when the sleeve (63) occupies said determined angular orientation, and in a longitudinally offset position in relation to said longitudinally determined service position, in the upstream direction in reference to said assembly direction (124), when the sleeve (63) occupies an orientation different from said determined angular orientation, in reference to said axis (120), to prevent the sleeve (63) from then reaching said longitudinally determined service position,
- the electrical connection means (83, 107) comprise said determined number of contact blades (107), which are electrically conductive and mutually insulated, each of which corresponds to a respective one of said electrically conductive plates (70) and has a first end (108), and a second end (106) offset in relation to the first end (108), fixed in relation to the matrix (1) and electrically connected to said electrical controlled-supply means (62), each blade (107) being elastically flexible, the first end (108) of the blade being firmly applied, in electrical conduction, against the corresponding electrically conductive plate (70), with a transverse elastic stress of the blade (107), when the sleeve (63) occupies said determined longitudinal service position and said determined angular orientation, **characterized in that** the blades are longitudinal blades each of which has a first free end, occupying a longitudinally and circumferentially determined position inside each passage (20, 21, 22), corresponding to that occupied by the corresponding electrically conductive plate (70) when the sleeve (63) occupies said longitudinally determined service position and said determined angular orientation, in relation to the matrix (1), and
- the respective longitudinal dimensions of the electrically conductive plates (70), the first (108) ends of the contact blades (107) and the offset between said longitudinally offset position of the sleeve (63) and said longitudinally determined service position of the sleeve (63) are chosen such that, in said longitudinally offset position of the sleeve, the electrically conductive plates (70) are longitudinally offset in relation to the first ends (108) of the contact blades (107) and said electrical conduction then cannot be established.

2. The injection device according to claim 1, **characterized in that** the first (108) and second (106) ends of the blades (107) are downstream ends (108) and upstream ends (106) thereof, respectively, in reference to the assembly direction.

3. The injection device according to any one of claims 1 and 2, **characterized in that** the assembly direction (124) is opposite the injection direction (2) and **in that** the biasing means (71, 109) are localized in zones of the sleeve (63) and the matrix (1), respectively, corresponding to the rear end zone (67) of the nozzle (19).

4. The injection device according to any one of claims 1 to 3, **characterized in that** the biasing means (71, 109) comprise a longitudinal notch (71) formed in a transverse edge (65) of the sleeve (63), turned toward the front in reference to the assembly direction (124), and a transverse finger (109) fixed in relation to the matrix (1) and forming a protrusion toward the axis (120) inside said passage (20, 21, 22), in a position such that it fits into said notch (71) when the sleeve (63) occupies said longitudinally determined service position and said determined orientation, in reference to said axis (120) and, preferably, can then abut longitudinally against a bottom (73) of the notch (71), and abuts against said edge (65) of the sleeve (63) while preventing the sleeve (63) from reaching said longitudinally determined service position when one causes it to slide longitudinally on the nozzle (19), in the assembly direction (124), whereas it occupies a different angular orientation than said determined angular orientation, in reference to said axis (120).

5. The injection device according to any one of claims 1 to 4, **characterized in that** the second ends (106) of the contact blades (107) are fixed integrally to an annular ring (76), made in an electrically insulating material, locally surrounding said passage (20, 21, 22) and itself fixed to the matrix (1).

6. The injection device according to claim 5, **characterized in that** the matrix (1) comprises at least two flat transverse components (7, 10), juxtaposed to each other by flat transverse faces (9, 11), respectively, together defining, around said passage (20, 21, 22), an annular groove for receiving said annular ring (77) and immobilizing it in the longitudinal transverse and circumferential directions.

7. The injection device according to claim 6, **characterized in that** the annular ring (76) and said groove (77) respectively have general and mutually complementary shapes for revolving around said axis (120), and comprise circumferential direction indexing means (81, 88).

8. The injection device according to claim 7, **characterized in that** the circumferential direction indexing means (81, 88) comprise on one hand a transverse finger (88) fixed in relation to the ring (76) and forming a protrusion in the direction moving away from the axis (120), and on the other hand, in at least one (10) of said components (7, 10), a notch (81) for receiving said finger (88).

9. The injection device according to claim 8, **characterized in that** said notch (81) of at least one (10) of the components (7, 10) of the matrix (1) constitutes an extreme zone of a channel (82) arranged in said component (10) and housing connection electrical conductors (83) between the two ends (106) of the electrically conductive blades (107) and the electrical controlled-supply means (62).

10. The injection device according to any one of claims 5 to 9, **characterized in that** said annular ring (76) integrally supports the biasing means (109) corresponding to the matrix (1).

## Patentansprüche

1. Vorrichtung zum Einspritzen eines thermoplastischen Materials im flüssigen Zustand in eine Gießform (4), die in Bezug auf eine bestimmte Längseinspritzrichtung (2) umfasst:
- eine starre Matrix (1), die eine Vorderwand (3) aufweist, die teilweise die Gießform (4) begrenzt, eine Rückwand (12) und wenigstens einen Längsdurchgang (20, 21, 22), der die Matrix (1) von ihrer Rückwand (12) zu ihrer Vorderwand (3) entlang einer bestimmten Längsachse (120) durchquert,
- eine Längseinspritzdüse (19), die koaxial im Inneren des Durchgangs (20, 21, 22) angeordnet ist und einen hinteren Endbereich (67) und einen vorderen Endbereich (23) aufweist, jeweils benachbart zur Rückwand (12) und zur Vorderwand (3), wobei ein innerer Längsumfang (27) einen Längskanal (26) begrenzt, der in den hinteren Endbereich (67) und den vorderen Endbereich (23) einmündet, sowie einen äußeren Längsumfang (29),
- Mittel (40, 47) zur Versorgung der Düse (19) mit thermoplastischem Material im flüssigen Zustand, die hinter der Rückwand (12) gelegen sind und mechanisch mit der Matrix und fluidmäßig mit dem Kanal (26) in dem hinteren Endbereich (67) der Düse (19) verbunden sind,
- eine längliche Wärmemanschette (63), die koaxial die Düse (19) im Inneren des Durchgangs (20, 21, 22) umgibt, die fest verbunden eine elektrische Einrichtung (69) trägt, die einen elektrischen Joulestrom-Heizwiderstand (69) einschließt und einen inneren Längsumfang (64) in engem Wärmeleitungs- und Reibungshaltkontakt in einer relativen, in Längsrichtung bestimmten Betriebsposition aufweist, wobei der Außenumfang (29) der Düse (19) und ein äußerer Längsumfang (68) fest miteinander verbunden eine bestimmte Anzahl von elektrisch leitenden Bereichen (70) tragen, die elektrisch mit der elektrischen Einrichtung (69) verbunden sind und jeweilige Position einnehmen, die in Längsrichtung und in Umfangsrichtung auf dem Außenumfang (68) der Manschette (63) bestimmt sind, wobei die Manschette (63) geeignet ist, in ihre relative, in Längsrichtung bestimmte Betriebsposition durch Längsverschiebung auf der Düse (19) in einer bestimmten Längsmontagerichtung (124) geführt zu werden, und
- Mittel (83, 107) zur elektrischen Verbindung zwischen den elektrisch leitenden Bereichen (70) und elektrische Mittel (62) zur gesteuerten Versorgung des elektrischen Widerstands (69) mit Strom, so dass
- die Matrix (1) im Inneren des Durchgangs (20, 21, 22) und die Muffe (63) fest miteinander verbunden jeweilige Absicherungsmittel (71, 109) aufweisen, die geeignet sind, sich gegenseitig ineinanderzufügen, wenn die Manschette (63) in Längsrichtung in der Montagerichtung (124) auf der Düse (19) gleitet, indem sie eine bestimmte Winkelorientierung in Bezug auf die Achse (120) bezüglich der Matrix (1) einnimmt, um der Manschette (63) zu erlauben, dann die in Längsrichtung bestimmte Betriebsposition zu erreichen, und Anstoßmittel für die Manschette (63) in der Montagerichtung (124) in der in Längsrichtung bestimmten Betriebsposition darzustellen, wenn die Manschette (63) die bestimmte Winkelorientierung einnimmt, und in einer in Längsrichtung bezüglich der in Längsrichtung bestimmten Betriebsposition verschobenen Position, in Richtung nach oben in Bezug auf die Montagerichtung (124), wenn die Manschette (63) eine andere Orientierung als die bestimmte Winkelorientierung in Bezug auf die Achse (120) einnimmt, um zu verhindern, dass die Manschette (63) dann die in Längsrichtung bestimmte Betriebsposition erreicht,
- die Mittel zur elektrischen Verbindung (83, 107) die bestimmte Anzahl von Kontaktzungen (107) umfassen, die elektrisch leitend und gegenseitig isoliert sind, von denen jede jeweils einem der elektrisch leitenden Bereiche (70) entspricht und ein erstes Ende (108) aufweist, und ein zweites Ende, das bezüglich dem ersten Ende (108) verschoben ist, das bezüglich der Matrix (1) fest und elektrisch mit den elektrischen Mitteln (62) zur gesteuerten Versorgung verbunden ist, wobei jede Zunge (107) elastisch flexibel ist; wobei das erste Ende (108) der Zunge sich geschlossen daran passt, in einer elektrischen Leitungsbeziehung, gegen den entsprechenden leitenden Bereich (70), mittels einer elastischen Querspannung der Zunge (107), wenn die Manschette (63) die in Längsrichtung bestimmte Betriebsposition und die bestimmte Winkelorientierung einnimmt,
**dadurch gekennzeichnet, dass** die Zungen längliche Zungen sind, von denen jede ein erstes freies Ende aufweist, das im Inneren des Durchgangs (20, 21, 22) eine in Längs- und Umfangsrichtung bestimmte Position einnimmt, die derjenigen entspricht, die der entsprechende elektrisch leitende Bereich (70) einnimmt, wenn die Manschette (63) die in Längsrichtung bestimmte Betriebsposition und die bestimmte Winkelorientierung bezüglich der Matrix (1) einnimmt,
- und die jeweiligen Längsabmessungen der elektrisch leitenden Bereiche (70) der ersten Enden (108) der Kontaktzungen und der Verschiebung zwischen der in Längsrichtung verschobenen Position der Manschette (63) und der in Längsrichtung bestimmten Betriebsposition der Manschette (63) derart gewählt sind, dass in der in Längsrichtung verschobenen Position der Manschette die elektrisch leitenden Bereiche (70) in Längsrichtung bezüglich den ersten Enden (108) der Kontaktzungen (107) verschoben sind und dass die elektrische Leitungsbeziehung dann nicht hergestellt werden kann.

2. Einspritzvorrichtung gemäß Anspruch 1, **dadurch gekennzeichnet, dass** die ersten (108) und zweiten (106) Enden der Zungen (107) untere Enden (108) bzw. obere Enden (106) dieser in Bezug auf die Montagerichtung sind.

3. Einspritzvorrichtung gemäß einem der Ansprüche 1 und 2, **dadurch gekennzeichnet, dass** die Montagerichtung (124) entgegengesetzt zur Einspritzrichtung (2) ist und dass die Absicherungsmittel (71, 109) in Bereichen der Manschette (63) und der Matrix (1) liegen, entsprechend dem hinteren Endbereich (67) der Düse (19).

4. Einspritzvorrichtung gemäß einem der Ansprüche 1 bis 3, **dadurch gekennzeichnet, dass** die Absicherungsmittel (71, 109) eine Längskerbe (71) umfassen, die in eine Querkante (65) der Manschette (63) eingeführt ist und in Bezug auf die Montagerichtung (124) nach vorne gedreht ist, sowie einen Querzapfen (109), der fest bezüglich der Matrix (1) ist und der einen Vorsprung zur Achse (120) im Inneren des Durchgangs (20, 21, 22) in einer Position bildet, so dass er sich in die Kerbe (71) einfügt, wenn die Manschette (63) die in Längsrichtung bestimmte Betriebsposition und die in Bezug auf die Achse (120) bestimmte Orientierung einnimmt und vorzugsweise in Längsrichtung gegen einen Boden (73) der Kerbe (71) anstoßen kann, und gegen die Kante (65) der Manschette (63) anstößt und so verhindert, dass die Manschette (63) die in Längsrichtung bestimmte Betriebsposition erreicht, wenn man sie in Längsrichtung auf der Düse (19) in der Montagerichtung (124) gleiten lässt, während sie eine andere Winkelorientierung als die bestimmte Winkelorientierung in Bezug auf die Achse (120) einnimmt.

5. Einspritzvorrichtung gemäß einem der Ansprüche 1 bis 4, **dadurch gekennzeichnet, dass** die beiden Enden (106) der Kontaktzungen (107) fest an einer ringförmigen Muffe (76) aus einem elektrisch isolierenden Material befestigt sind, die lokal den Durchgang (20, 21, 22) umgibt und selbst an der Matrix (1) befestigt ist.

6. Einspritzvorrichtung gemäß Anspruch 5, **dadurch gekennzeichnet, dass** die Matrix (1) wenigstens zwei ebene Querkomponenten (7, 10) umfasst, die an jeweiligen ebenen Querwänden (9, 11) aneinander gebaut sind, die gemeinsam um den Durchgang (20, 21, 22) eine ringförmige Vertiefung zur Aufnahme der ringförmigen Muffe (77) und zur Immobilisierung dieser in Längs-, Quer-, und Umfangsrichtung festlegen.

7. Einspritzvorrichtung gemäß Anspruch 6, **dadurch gekennzeichnet, dass** die ringförmige Muffe (76) und die Vertiefung (77) allgemeine Rotationsformen um die Achse (120) aufweisen und zueinander komplementär sind, und Einrastmittel (81, 88) in Umfangsrichtung umfassen.

8. Einspritzvorrichtung gemäß Anspruch 7, **dadurch gekennzeichnet, dass** die Einrastmittel (81, 88) in Umfangsrichtung einerseits einen Querzapfen (88) umfassen, der fest bezüglich dem Ring (76) ist und einen Vorsprung in der Richtung einer Entfernung bezüglich der Achse (120) bildet und andererseits wenigstens in der einen (10) der Komponenten (7, 10) eine Kerbe (81) zur Aufnahme des Zapfens (88) bildet.

9. Einspritzvorrichtung gemäß Anspruch 8, **dadurch gekennzeichnet, dass** die Kerbe (81) der wenigstens einen (10) der Komponenten (7, 10) der Matrix (1) einen Endbereich eines Kanals (82) darstellt, der in der Komponente (10) angeordnet ist und elektrische Leiter (83) zur Verbindung zwischen den zweiten Enden (106) der elektrisch leitenden Zungen (107) und den elektrischen Mitteln (62) zur gesteuerten Versorgung unterbringt.

10. Einspritzvorrichtung gemäß einem der Ansprüche 5 bis 9, **dadurch gekennzeichnet, dass** die ringförmige Muffe (76) fest verbunden die Absicherungsmittel (109) trägt, die der Matrix (1) entsprechen.
